# EUROPEAN PATENT APPLICATION

(11) **EP 4 734 414 A2**
(43) Date of publication of application: **29.04.2026**
(21) Application number: 26156706.9
(22) Date of filing: 21.10.2022
(51) Int. Cl.: H04L 1/00

(54) **MULTI-LINK FLEXIBLE WAKE TIME SCHEDULING**

(30) Priority: 21.10.2021 US 202163270125 P
(62) Divisional of application: 22203078.5
(71) Applicant: Ofinno, LLC, Reston, VA 20190 (US)
(72) Inventor: KIM, Jeongki, Reston, 20190 (US); RYU, Kiseon, Reston, 20190 (US); DINAN, Esmael Hejazi, Reston, 20190 (US)
(74) Representative: Westphal, Mussgnug & Partner, Patentanwälte mbB

(57) **Abstract**

A method for an access point multi-link device (AP MLD) of an IEEE 802.11 (WLAN) infrastructure network is described herein. In one embodiment, the method comprises transmitting - by the AP MLD to a non-AP MLD - a first frame indicating configuration of a target wake time (TWT) service period (SP) of a first link of a plurality of links between the AP MLD and non-AP MLD; and receiving - by the AP MLD from the non-AP MLD via a second link of the plurality of links - a second frame indicating rescheduling of the TWT SP of the first link, wherein the second frame comprises link identifier (ID) information of the first link. Moreover, respective apparatuses and devices are described.

## Description

### CROSS-REFERENCE TO RELATED APPLICATIONS

This application claims the benefit of U.S. Provisional Application No. 63/270,125, filed on October 21, 2021. The above referenced application is hereby incorporated by reference in its entirety.

### BACKGROUND

A communication device uses multiple links for data transmission and/or reception. The multiple links each have associated resources and/or capabilities.

### SUMMARY

The invention is set out in the appended claims. Accordingly, a method for an access point multi-link device (AP MLD) of an IEEE 802.11 (WLAN) infra-structure network is described herein. In one embodiment, the method comprises transmitting - by the AP MLD to a non-AP MLD - a first frame indicating configuration of a target wake time (TWT) service period (SP) of a first link of a plurality of links between the AP MLD and non-AP MLD; and receiving - by the AP MLD from the non-AP MLD via a second link of the plurality of links - a second frame indicating rescheduling of the TWT SP of the first link, wherein the second frame comprises link identifier (ID) information of the first link. Moreover, respective apparatuses and devices are described.

The following summary presents a simplified summary of certain features. The summary is not an extensive overview and is not intended to identify key or critical elements. A communication device may be configured to operate in a plurality of states. At least some states may be associated with one or more capabilities and/or a corresponding level of power consumption. The communication device may enter a reduced power state (e.g., a sleep state) to conserve power, for example, in periods of time during which transmission and/or reception may not be scheduled to occur. The communication device may transition to a non-reduced power state (e.g., an awake state) to perform signal transmission and/or reception, for example, based on a predetermined schedule. Two or more devices may be configured to use multiple links (e.g., multiple frequency bands/channels), for example, in a multi-link communication. The two or more devices may comprise an access point (AP) multi-link device and a non-AP MLD. A communication device may be in a reduced power state or a non-reduced power state with respect to each link of the multiple links. A communication device may need to reschedule communication in a first link that may be in a reduced power state (e.g., a sleep state), for example, to advance transmission/reception of latency-sensitive information via the first link. Communications via the first link may be rescheduled (e.g., advanced) via an indication that may be sent via a second link of the multi-link communication between communication devices. The indication may comprise one or more of an identifier of the first link to be rescheduled, and/or updated timing information for a target wake time (TWT) service period (SP) for the first link. Based on receiving the indication, a communication device may enter a non-reduced power state (e.g., TWT SP) earlier than previously scheduled, which may enable the communication device to receive time-sensitive and/or high priority communications via the first link.

These and other features and advantages are described in greater detail below.

### BRIEF DESCRIPTION OF THE DRAWINGS

Some features are shown by way of example, and not by limitation, in the accompanying drawings. In the drawings, like numerals reference similar elements.
FIG. 1A and FIG. 1B show example communication networks.
FIG. 2 shows example devices in a communication network.
FIG. 3 shows an example target wait time (TWT) operation.
FIG. 4 shows an example TWT operation between multi-link devices(MLDs).
FIG. 5 shows an example TWT element for supporting individual TWT operation.
FIG. 6 shows an example TWT element for supporting restricted TWT operation.
FIG. 7 shows an example of individual TWT operation.
FIG. 8 shows an example of broadcast TWT operation.
FIG. 9 shows an example of TWT protection in individual TWT operation.
FIG. 10 shows an example of restricted TWT operation.
FIG. 11 shows an example negotiation of traffic identifier (TID)-to-link mapping.
FIG. 12 shows an example TID-to-link mapping element.
FIG. 13 shows an example TWT information field.
FIG. 14A shows an example of a flexible TWT as configured by an access point (AP).
FIG. 14B shows an example of a flexible TWT as configured by a station (STA).
FIG. 15 shows an example of multi-link (ML) TWT setup.
FIG. 16 shows an example delay of traffic in multi-link transmission.
FIG. 17 shows an example ML flexible TWT operation.
FIG. 18 shows an example of ML flexible TWT operation.
FIG. 19 shows an example ML TWT information field.
FIG. 20 shows an example ML TWT information field.
FIG. 21 shows an example ML TWT information frame.
FIG. 22A, FIG. 22B and FIG. 22C show example ML TWT information fields.
FIG. 23 shows an example ML TWT information field.
FIG. 24 shows an example method for rescheduling a next TWT SP.
FIG. 25 shows an example method for rescheduling a TWT SP.
FIG. 26 shows example elements of a computing device that may be used to implement any of the various devices described herein.

### DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems, which may be used in the technical field of multicarrier communication systems. More particularly, the technology disclosed herein may relate to power saving procedures for wireless communications, including, but not limited to, Wi-Fi communications.

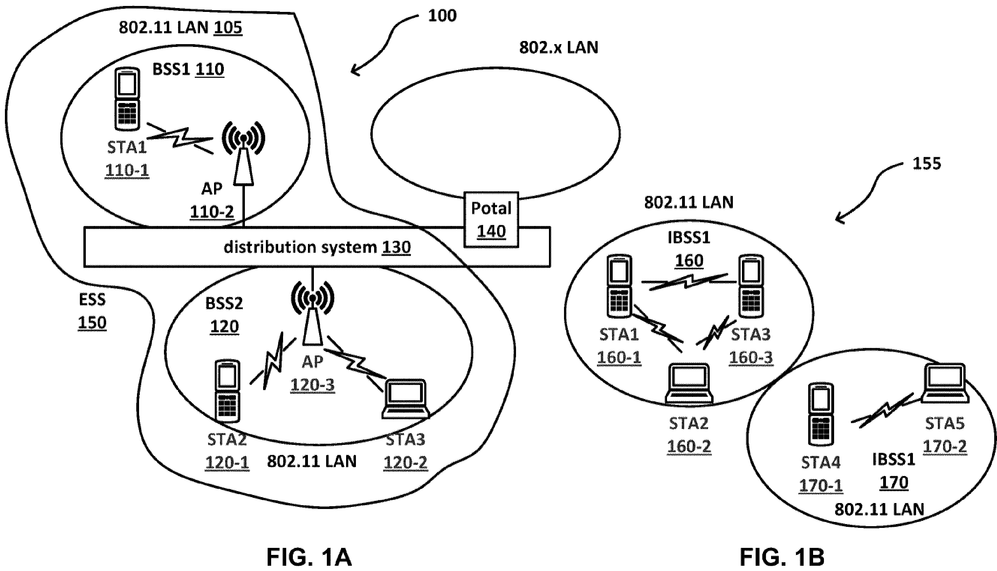

FIG.1A and FIG. 1B show example communication networks. The communication network in FIG. 1A may be a wireless local area network (WLAN) 100. The WLAN 100 may comprise an Institute of Electrical and Electronic Engineers (IEEE) 802.11 infra-structure network, or any other type of communication networkThe WLAN 100 may comprise one or more basic service sets (BSSs) 110 and 120. Devices within a BSS may be referred to as stations (STAs). The BSSs 110 and 120 may each comprise an access point (AP or AP STA) (e.g., AP 110-2) and one or more other stations (STAs or non-AP STAs) (e.g., STA1 100-1). The APs and the STAs may successfully sync with each other for communication. The BSSs 110 and 120 may or may not be indicative or be associated with a particular area. The BSS 120 may comprise one AP 120-3 and one or more STAs 120-1 and 120-2 that may connect to the AP 120-3. An infrastructure BSS may comprise at least one STA, one or more APs (e.g., APs 110-2 and 120-3) providing a distribution service, and a distribution system (DS) 130 connecting the one or more APs. The distribution system 130 may implement an extended service set (ESS) 150 by connecting multiple BSSs (e.g., BSSs 110 and 120). The ESS 150 may be a network comprising one or more APs (e.g., APs 110-2 and 120-3) thatmay be connected via the distribution system 130. The APs included in the ESS 150 may have a same service set identification (SSID). A portal 140 may function as a bridge connecting the WLAN network 100 (e.g., an IEEE 802.11 network, or any other communication network) with other networks (e.g., an 802.X network, or any other communication network).

FIG. 1A shows a network comprising APs (e.g., APs 110-2, 120-3) and/or a network comprising APs (e.g., APs 110-2, 120-3) and STAs (e.g., STAs 110-1, 120-1, 120-2). A network of STAs may be configured without requiring the presence of APs (e.g., APs 110-2, 120-3) to perform communication. A network in which communication may be performed between STAs, without requiring the APs (e.g., APs 110-2, 120-3) to be connected to the network, may be termed as an ad-hoc network or an independent basic service set (IBSS).

FIG. 1B shows example IBSSs. An IBSS may be a BSS that may operates in an ad-hoc mode. A centralized management entity that performs a management function at the center does not exist in an IBSS because the IBSS does not include an AP. For example, in the IBSSs 160 and 170, STAs (e.g., STAs 160-1, 160-2, 160-3, 170-1, 170-2) are managed in a distributed manner. In the IBSSs 160 and 170, the STAs (e.g., STAs 160-1, 160-2, 160-3, 170-1, 170-2) may comprise movable STAs. The STAs (e.g., STAs 160-1, 160-2, 160-3, 170-1, 170-2) may or may not be permitted to access the DS to constitute a self-contained network.

A STA may comprise one or more layers in accordance with the open systems interconnection (OSI) model. For example, STAs may comprise a medium access control (MAC) layer that may be in accordance with a defined standard (e.g., an IEEE 802.11 standard, or any other standard). A physical (PHY) layer interface for a radio medium may include the APs and the non-AP stations (STAs). The STA may referred to as a mobile terminal, a wireless device, a wireless transmit/receive unit (WTRU), user equipment (UE), a mobile station (MS), a mobile subscriber unit, and/or a userFor example, with respect to wireless LAN communications, a device participating in uplink multi-user, multiple input, multiple output (MU-MIMO) and/or uplink orthogonal frequency division multiple access (OFDMA) transmission may be referred to as a STA. However, STAs may not be limited to only participating in wireless LAN communications, and may perform other types of communications, operations, and/or procedures.

A frequency band to be used for communication may include multiple sub-bands and/or frequency channels. For example, messages (e.g., data packets, physical layer protocol data units (PPDUs)) conforming to the IEEE 802.11 standard (e.g., IEEE 802.11n, 802.11ac, 802.11ax, 802.11be, etc., standards) may be sent/transmitted over the 2.4, 5 GHz, and/or 6 GHz bands. Each of the bands may be divided into multiple 20 MHz channels. PPDUs conforming to the IEEE 802.11 standard may be transmitted, for example, via a physical channel with a minimum bandwidth of 20 MHz. Larger channels may be formed through channel bonding. For example, the PPDUs may be transmitted via physical channels with bandwidths of 40 MHz, 80 MHz, 160 MHz, 520 MHz, or any other frequency greater than 20 MHz, by bonding together multiple 20 MHz channels.

A PPDU may be a composite structure that may comprise a PHY preamble and a payload in the form of a physical layer convergence protocol (PLCP) service data unit (PSDU). For example, the PSDU may comprise a PLCP preamble, a header, and/or one or more MAC protocol data units (MPDUs). Information indicated by the PHY preamble may be used by a receiving device to decode subsequent data in the PSDU. Preamble fields may be duplicated and transmitted in each of multiple component channels in a bonded channel, for example, if the PPDU is sent via the bonded channel. The PHY preamble may comprise both a legacy portion (e.g., a legacy preamble) and a non-legacy portion (e.g., a non-legacy preamble). The legacy preamble may be used for packet detection, automatic gain control and channel estimation, etc. The legacy preamble also may generally be used to maintain compatibility with legacy devices. The information provided in, and the format and coding of the non-legacy portion of the preamble may be based on the particular IEEE 802.11 protocol to be used to transmit the payload.

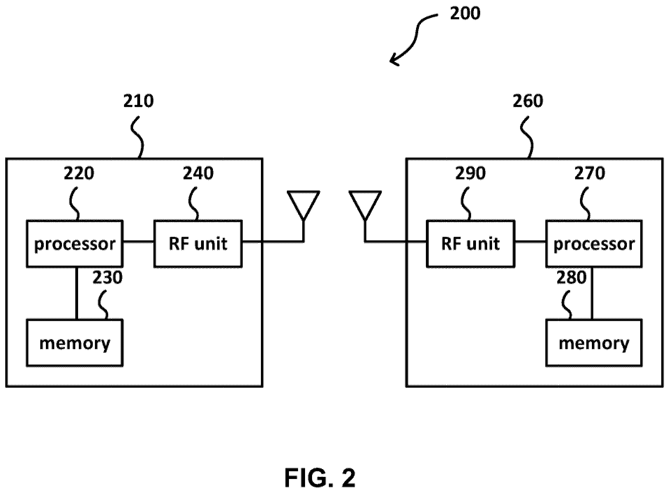

FIG. 2 shows example devices in a communication network. The communication network 200 of FIG. 2 may comprise multiple devices (e.g., communication devices 210 and 260). The communication devices 210 and 260 may perform various functions and procedures as described herein.

For example, the communication device 210 may may operate as an AP (e.g., an AP STA) and the communication device 260 may operate as a STA (e.g., a non-AP STA). The communication device 210 may operate as a STA (e.g., a non-AP STA) and the communication device 260 may operate as an AP (e.g., an AP STA). The communication device 210 and the communication device 260 may both operate as STAs (e.g., a non-AP STAs) or may both operate as APs (e.g., AP STAs).

The communication device 210 may comprise at least one processor 220, a memory 230, and/or at least one transceiver (e.g., RF unit) 240. The communication device 260 may comprise at least one processor 270, memory 280, and/or at least one transceiver (e.g., RF unit) 290. The transceivers (e.g., transceivers 240, 290) may send/receive radio signals. The transceivers may operate as a PHY layer (e.g., a PHY layer in accordance with an IEEE 802.11 protocol, a 3^{rd} generation partnership project (3GPP) protocol, etc.). The processors (e.g., processors 220, 270) may operate as a PHY layer and/or MAC layer. The processors may be operatively connected to the transceivers, respectively.

The processors and/or the transceivers may comprise an application specific integrated circuit (ASIC), other chipset, logic circuit, and/or data processor. The memory (e.g., memory 230, 280) may include read-only memory (ROM), random access memory (RAM), flash memory, memory card, storage medium and/or other storage unit. The procedures described herein may be executed by modules that perform various functions described herein (e.g., in accordance with instructions stored in the memory). The modules can be stored in the memory and executed by the processor. The memory may be integrated with the processor or may be external to the processor. The memory may be operatively connected to the processor. The processor may implement the functions, processes and/or methods as described herein. For example, the processor 220 may be implemented to perform operations of the AP as described herein. The memory may store instructions that, when executed by one or more processors, cause the communication device to perform methods as described herein. For example, the memory may be a non-transitory computer-readable medium comprising instructions that, when executed by the one or more processors, cause the one or more processors to perform methods and operations described herein.

The processor 220 may perform operations of an AP as described herein. For example, the processor 220 may be implemented to send/transmit a first frame indicating a restricted target wake time (r-TWT) service period (SP) and one or more traffic indicators/identifiers (TIDs). The TIDs may correspond to messages (e.g., data frames) with latency sensitive traffic associated with the r-TWT SP. The processor 220 may determine that a wireless medium is not being used by one or more STAs during a time period within the r-TWT SP. The processor 220 may terminate the r-TWT SP based on the determining.

The processor 270 may be implemented to perform operations of the STA as described herein. For example, the processor 270 may a beacon frame indicating an r-TWT SP and one or more TIDs. The one or more TIDs may be for data frames with latency sensitive traffic associated with the r-TWT SP from the AP. The processor 270 may determine that a wireless medium is not being used by the AP and/or other STAs during another time period within the r-TWT SP. The processor 270 may terminate the r-TWT SP based on the determining.

Target wake times (TWTs) may allow STAs to manage activity in a communication network (e.g., a BSS). For example, the TWTs may enable scheduling of STAs to operate at different times to reduce contention. TWTs may allow STAs to reduce the required amount of time that a STA (e.g., utilizing a power management mode) may be awake and reduce power consumption. TWTs may be individual TWTs or broadcast TWTs. A STA that requests a TWT agreement may be referred as a TWT requesting STA. The STA that responds to the request may be referred as a TWT responding STA. A TWT responding STA may be an AP. A TWT requesting STA may be assigned specific time periods to wake up and exchange frames with the TWT responding STA. A TWT requesting STA may communicate wake scheduling information to a TWT responding STA. The TWT responding STA may send TWT values to the TWT requesting STA, for example, if a TWT agreement has been established between them. The TWT values may be used by the TWT requesting STA to determine a time for waking up and performing a frame exchange.

A TWT requesting STA may operate in an explicit TWT mode and/or an implicit TWT mode. The TWT requesting STA may receive a next TWT information from the TWT responding STA. A TWT requesting STA may wake up (e.g., at a time determined based on the next TWT information) and perform a frame exchange, for example, if explicit TWT is employed. The TWT requesting STA may determine/calculate a next TWT (e.g., for performing a frame exchange) by adding a fixed value to a current TWT value, for example, if implicit TWT is used.

TWT values for an implicit TWT may be periodic. A TWT requesting STA using an implicit TWT agreement may determine a next TWT service period (TWT SP) start time by adding a value of TWT wake interval associated with the TWT agreement to a value of a start time of the current TWT SP. The TWT responding STA may indicate the start time for a series of TWT SPs corresponding to a single TWT flow indicator/identifier of an implicit TWT agreement. The TWT responding STA may indicate the start time in a target wake time field of a TWT element. The TWT element may indicate acceptance of the TWT in a TWT setup command field. The start time of the TWT SP series may indicate the beginning time of a first TWT SP in the TWT SP series. Start times for subsequent TWT SPs may be determined by adding the value of TWT wake interval to the current TWT SP start time. A TWT requesting STA that is awake for an implicit TWT SP may transition to a doze state, for example, after the TWT SP has elapsed and/or after receiving an end of service period (EOSP) indication (e.g., an ESOP field equal to 1) from the TWT responding STA, whichever occurs first.

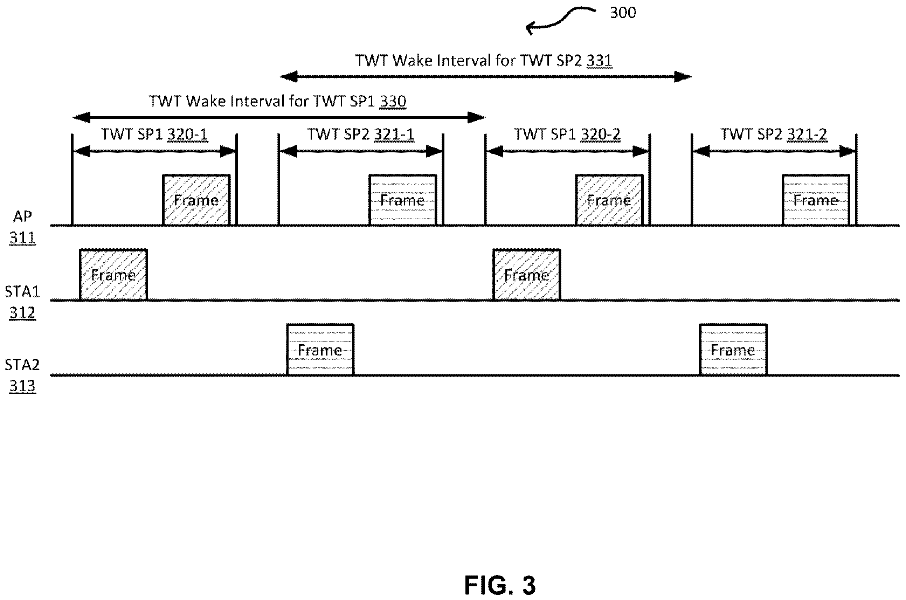

FIG. 3 shows an example TWT operation. A TWT session, for the TWT operation 300, may be negotiated between an AP (e.g., AP 311) and a STA (e.g., STA1 312 or STA2 313). This may configure a TWT SP for downlink (DL) and uplink (UL) between the AP and the STA. Any traffic between the AP and the STA may be limited within the negotiated SP. A TWT SP may start at a specific time. The TWT SP may run/continue for the SP duration. The TWT SP may repeat (e.g., every SP interval). For example, the AP 311 and the STA1 312 may establish a TWT SP1 320. The AP 311 and a STA2 313 may establish a TWT SP2 321. The AP 311 and the STA1 312 may exchange frames within/during the TWT SP1 320-1. The STA1 311 may be in doze state until a next TWT SP1 320-2, for example, after the end of the TWT SP1 320-1. An interval/duration between the TWT SP1 320-1 and the TWT SP2 320-2 may correspond to a TWT wake interval for TWT SP1 330. The AP 311 and the STA1 312 may exchange frames within/during the second TWT SP2 320-2, for example, based on the start of the TWT SP2 320-2. The AP 311 and the STA2 313 may exchange frames during the TWT SP2 321-1. The STA2 312 may be in doze state until the next TWT SP2 321-2, for example, after the end of the TWT SP1 321-1. The duration between the TWT SP1 321-1 and the TWT SP2 321-2 may correspond to a TWT wake interval for TWT SP2 331. The AP 311 and the STA2 313 may exchange frames within/during the second TWT SP2 321-2, for example, based on the start of TWT SP2 321-2.

A STA may be in an awake state within/during a TWT SP. The STA may be fully powered if the STA is in an awake state. The STA, in an awake state, may send/transmit and/or receive messages (e.g., a frame) to/from an AP and/or other STAs. A STA, in a doze state, may not send/transmit or receive messages (e.g., a frame) to/from an AP and/or other STAs.

A multi-link device (MLD) may a device that is a logical entity and has more than one affiliated station (STA) and has a single medium access control (MAC) service access point (SAP) to logical link control. The logical link control may include one MAC data service. An access point multi-link device (AP MLD) may be an MLD in which a STA affiliated with the MLD is an AP STA (or an AP). A non-access point multi-link device (non-AP MLD) may be an MLD in which a STA affiliated with the MLD is a non-AP STA (or a STA).

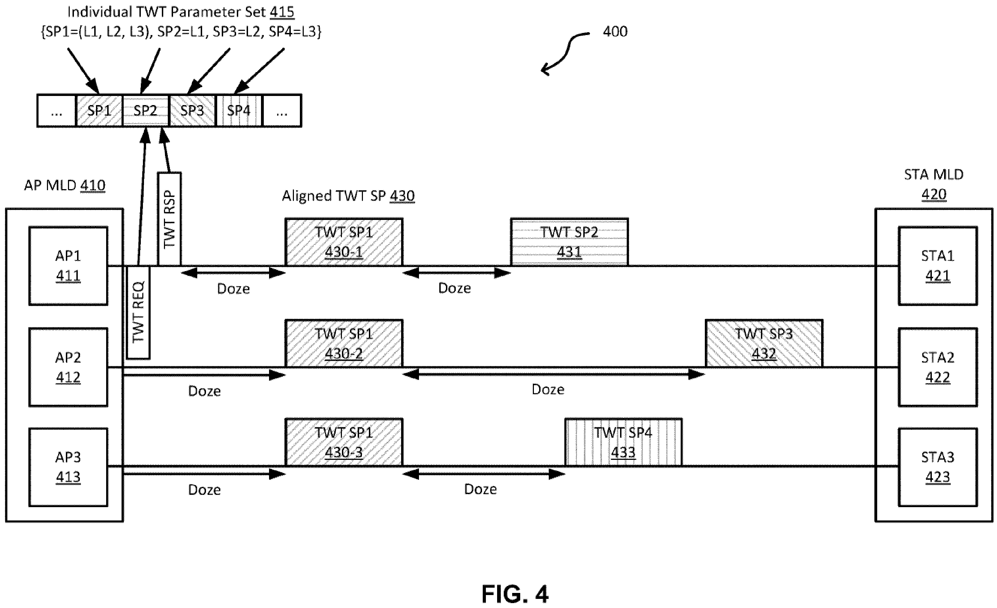

FIG. 4 shows an example TWT operation between multi-link devices. The example TWT operation 400 as shown in FIG. 4 may be between an AP multi-link device (AP MLD) 410 and one or more STA multi-link device (STA MLD) 420.

A TWT requesting STA affiliated with STA MLD (e.g., STA MLD 420) and a TWT responding STA affiliated with AP MLD (e.g., AP MLD 410) may negotiate TWT agreements. Messages used for negotiating TWT agreements may comprise one or more TWT elements. The one or more TWT elements may be in a TWT parameter set 415. The TWT elements may comprise link indicator/identifier (ID) bitmap subfields indicating different link(s) in a same TWT setup frame. TWT parameters provided by a TWT element (e.g., in the TWT parameter set 415) may be applied to the respective link (e.g., link 1 L1, link 2 L2, link 3 L3) that is indicated in the TWT element. For example, the AP MLD 410 may have three affiliated APs: AP1 411 operating on a first link/band (e.g., 2.4 GHz band), AP2 412 operating on a second link/band (e.g., 5 GHz band), and AP3 413 operating on a third link/band (e.g., 6 GHz band). For example, STAs affiliated with STA MLD 420 may be respectively associated with APs affiliated with AP MLD 410. STA 1 421 may be associated with AP 1 411 operating on the first link, STA 1 422 may be associated with AP 1 412 operating on the second link, STA 1 423 may be associated with AP 1 413 operating on the third link. STA1 421 affiliated with the STA MLD 420, may send three TWT elements in a TWT request (e.g., TWT REQ) to AP1 411 affiliated with the AP MLD 410. The three TWT elements may indicate the links of AP1 411, AP2 412, and AP3 413. The three TWT elements may request three links to be setup as part of TWT agreements. The three TWT elements may have different TWT parameters (e.g., TWTs).

The AP1 411 may send three TWT elements in a TWT response (e.g., TWT RESP) to the STA1 421. The AP 411 may send the TWT response, for example, based on/after receiving the TWT request. The three TWT elements in the TWT response, may indicate links of AP1 411, AP2 412, and AP3 413 respectively. The three TWT elements may comprise a value indicating acceptance of TWT in a TWT setup command field. Three TWT SPs with different TWT parameters may exist on the three links (e.g., link 1 between AP1 411 and STA1 421, link 2 between AP2 412 and STA2 422, and link 3 between AP3 413 and STA3 423), respectively, for example, based on (e.g., after) setup of successful TWT agreements on the three links. The TWT field of a TWT element that indicates link 1 may be in reference to the time synchronization function (TSF) time of link 1. The TWT field of the TWT element that indicates link 2 may be in reference to the TSF time of link 2. The TWT field of the TWT element that link 3 may be in reference to the TSF time of link 3. TWT SPs for each of the links may or may not be aligned. With reference to the example shown in FIG. 4, the TWTs of the STA1 421 to the AP1 411, the STA2 422 to the AP2 412, and the STA3 423 to the AP3 413 may be aligned. For example, the first TWT SPs (e.g., TWT SP1 430-1, TWT SP1 430-2, and TWT SP1 430-3) may be aligned. The TWT wake intervals may be set differently for each of the links. For example, the second TWT SPs (e.g., TWT SP2 431, TWT SP3 432, and TWT SP4 433) may not be aligned. The STA1 421, the STA2 422, and the STA3 423 may be in doze state during the TWT wake intervals until the second TWT SPs (e.g., TWT SP2 431, TWT SP3 432, and TWT SP4 433) start, respectively. While FIG. 4 corresponds to an example where the AP MLD 410 and STA MLD 420 comprise three affiliated APs and three affiliated STAs, respectively, the AP MLD 410 and STA MLD 420 may have different quantities of affiliated APs and affiliated STAs, respectively.

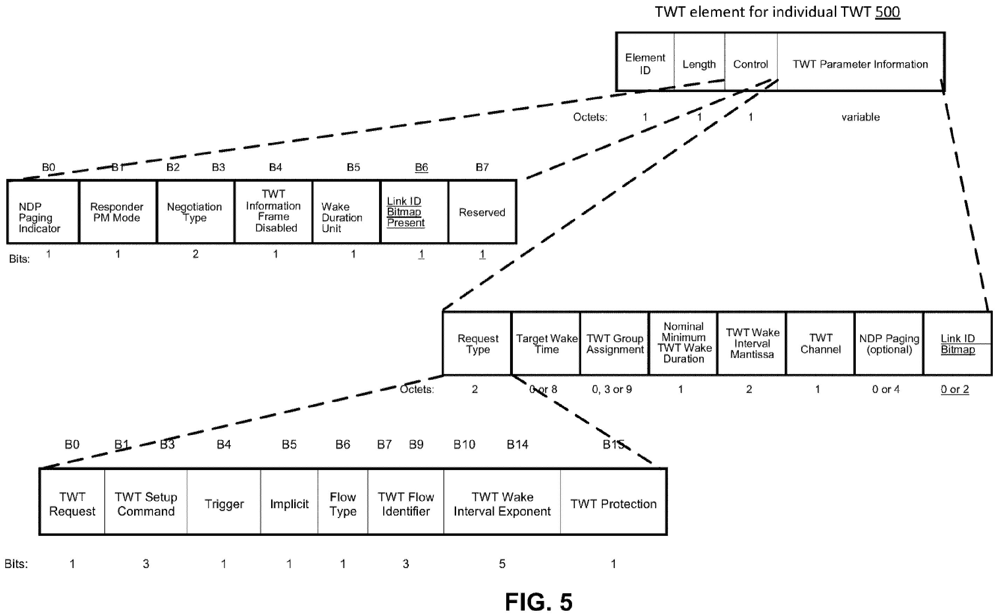

FIG. 5 shows an example TWT element for supporting individual TWT operation. An AP and a STA, may negotiate a TWT using a TWT element 500 to enable TWT scheduling. The TWT element 500 may provide the necessary signaling between devices to schedule one or more TWTs. The TWT element 500 may indicate TWT element parameters. An AP and/or a STA may send/transmit the TWT element 500, in an individually addressed management frame, when the TWTs are negotiated between the AP and the STA during a TWT setup phase. The management frame may be associated with a type (e.g., action, action with no acknowlegdement, (re)association request/response, probe request/response). The TWT element 500 may be included in a TWT request and/or a TWT response.

The STA requesting TWT scheduling may be referred to as a TWT requesting STA. The AP responding to the request may be referrred to as a TWT responding STA. TWT schedule and parameters may be provided during the TWT setup phase. Renegotiation/changes of TWT schedules may be indicated/signaled via individually addressed frames that contain updated TWT parameters. The frames may be management frames (e.g., as described herein), control frames, and/or data frames that comprise one or more fields indicating updated TWT schedules and the updated TWT parameters. One or more STAs may negotiate a TWT schedule. For example, a first STA negotiating the schedule may be the TWT requesting STA. A second STA negotiating the schedule may be the TWT responding STA.

An element indicator/identifier (ID) (e.g., 1 octet in length, or any other length) may indicate that an information element, containing the element ID, is a TWT element. A length field (e.g., 1 octet in length, or any other length) may indicate the length of the TWT element 500 (e.g., starting from the control field until the end of the TWT element). The end of the TWT element may be end of a TWT channel field or the end of a link ID bitmap field). The TWT element 500 may comprise one or more of a TWT field (e.g., 8 octets or less, or any other length), a TWT group assignment field (e.g., 9, 3, 2, or 0 octets, or any other length), a nominal minimal wake duration field (e.g., 1 octet, or any other length), a TWT wake interval mantissa field (e.g., 2 octets, or any other length), a TWT channel field (e.g., 1 octet, or any other length), a null data packet (NDP) paging field (e.g., 0 octets, 4 octets, or any other length) and/or a kink ID bitmap field (e.g., 0 octetes, 2 octets, or any other length). The length field may indicate a length of a TWT element that comprises one or more groups of the above fields (e.g., groups of the fields comprising at least one of a control field, a request type field, the TWT group assignment field, the nominal minimum wake duration field, TWT wake interval mantissa field, the TWT channel field, the NDP paging field, and/or the link ID bitmap field as shown in the TWT element 500). The TWT element 500 may indicate/comprise TWT parameters for one or more TWT negotiations. A TWT negotiation indicated by the TWT element may be identified by a unique TWT flow indicator/identifier.

A request type field (e.g., 2 octets, or any other length) may indicate a type of TWT request. The request type field may comprise one or more fields (or subfields). The fields may comprise a TWT request field (e.g., 1 bit, or any other quantity of bits), a TWT setup command field (e.g., 3 bits, or any other quantity of bits), a trigger field (e.g., 1 bit, or any other quantity of bits), an implicit field (e.g., 1 bit, or any other quantity of bits), a flow type field (e.g., 1 bit, or any other quantity of bits), a TWT flow identifier field (e.g., 3 bits, or any other quantity of bits), a wake interval exponent field (e.g., 5 bits, or any other quantity of bits), and/or a TWT protection field (e.g., 1 bit, or any other quantity of bits).

The TWT request field may indicate whether the TWT element 500 represents a request. The TWT element 500 may be a request to initiate TWT scheduling/setup, for example, if TWT request field indicates a first value (e.g., 1, or any other value).

The TWT setup command field may indicate a type of a TWT command that is associated with a TWT request or a TWT response. The types of TWT commands, for a TWT request, may comprise: a request TWT command (e.g., the TWT field, in the request TWT command, may comprise zeros because the TWT responding STA may specify the TWT value), a suggest TWT command (e.g., the TWT requesting STA may suggest/indicate, via the suggest TWT command, a TWT value), and a demand TWT command (e.g., the TWT requesting STA may demand/request, via the demand TWT command, a TWT value). The TWT field comprising a first value (e.g., 0) may indicate that the TWT command is a request TWT command. The TWT field comprising a second value (e.g., 1) may indicate that the TWT command is a suggest TWT command. The TWT field comprising a third value (e.g., 2) may indicate that the TWT command is a demand TWT command.

The types of TWT commands, for a TWT response, may comprise: a TWT grouping command (e.g., the TWT responding STA may suggest/indicate, in the TWT grouping command, TWT group parameters that are different from the suggested or demanded TWT parameters of the TWT requesting STA), an accept TWT command (e.g., the TWT responding STA may accept the TWT request with the TWT parameters indicated in the accept TWT command), an alternate TWT command (e.g., the TWT responding STA may suggest, in the alternate TWT command, TWT parameters that are different from the parameters suggested or demanded by the TWT requesting STA), a dictate TWT command (e.g., the TWT responding STA may demand, via the dictate TWT command, TWT parameters that are different from the parameters suggested or demanded by the TWT requesting STA), and/or a reject TWT command (e.g., the TWT responding STA may reject, using the reject TWT command, the TWT setup). The TWT field comprising a fourth value (e.g., 3) may indicate that the TWT command is a TWT grouping command. The TWT field comprising a fifth value (e.g., 4) may indicate that the TWT command is an accept TWT command. The TWT field comprising a sixth value (e.g., 5) may indicate that the TWT command is an alternate TWT command. The TWT field comprising a seventh value (e.g., 6) may indicate that the TWT command is a dictate TWT command. The TWT field comprising an eighth value (e.g., 7) may indicate that the TWT command is a rejectTWT command.

The TWT command, associated with a TWT response, may indicate that the TWT response is: an unsolicited TWT response (e.g., the TWT responding STA may demand a recipient should follow the TWT schedule contained in the element), associated with a broadcast TWT (e.g., the TWT responding STA may schedule the TWT for any STA that is receives/reads the element), etc. The TWT element 500, for an unsolicited TWT response, may include a value indicating a dictate TWT command in the TWT setup command field. The TWT request field, for the unsolicited response, may be set to a specific value (e.g., 0, or any other value). The unsolicited TWT response may be an individually addressed frame that is intended for a specific STA. A a broadcast TWT may be for multiple STAs and may be carried in a broadcast frame (e.g., a beacon).The unsolicited TWT response may typically involve a frame exchange in which the STA receiving the unsolicited TWT response may respond with an acknowledgment (ACK). Broadcast TWTs may or may not be acknowledged.

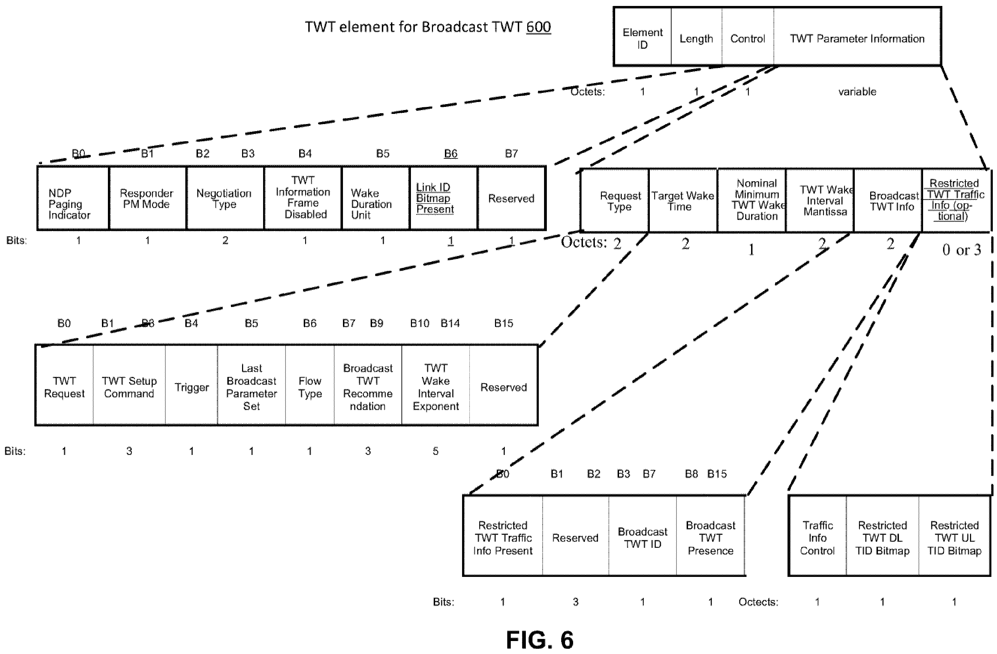

FIG. 6 shows an example TWT element for supporting restricted TWT operation. The TWT element 600 shown in FIG. 6 may comprise a plurality of fields. An element indicator/ID (e.g., 1 octet in length, or any other length) may indicate that an information element is a TWT element. A length field (e.g., 1 octet, or any other length) may indicate a length of the TWT element 600 starting from the control field until the end of the TWT element (e.g., the end of the broadcast TWT information field or the end of the restricted TWT traffic information field). The TWT element 600, for a restricted TWT, may be send/transmitted in a broadcast management frame (e.g., a beacon frame, a traffic indication map (TIM) broadcast frame, and/or a probe response frame, etc). The TWT element 600 may provide non-negotiated schedules (e.g., broadcast TWT schedules). The TWT element 600 may be/represent a solicited TWT message (e.g., a response to a request to initiate TWT scheduling/setup), an unsolicited TWT message, and/or a broadcast TWT message, for example, if the TWT request field indicates a first value (e.g., 0, or any other value). The TWT element 600 may comprise one or more of a TWT field (e.g., 2 octets, or any other length), a nominal minimal wake duration field (e.g., 1 octet, or any other length), a TWT wake interval mantissa (e.g., 2 octets, or any other length), a broadcast TWT information field (e.g., 2 octets or any other length), and/or a restricted TWT traffic information field (e.g., 0 or 3 octets, or any other length).

A TWT wake interval, indicated by a TWT element that is sent by a TWT responding STA or a TWT scheduling AP, may be equal to the average time that a STA expects to elapse between successive TWT SPs start times. A TWT wake interval exponent subfield may be set to indicate a value of the exponent of the TWT wake interval value (e.g., in microseconds). The base used for the exponent may be equal to 2 (or any other value). A TWT wake interval mantissa subfield may be set to the value of the mantissa of the TWT wake interval value (e.g., in microseconds). The TWT wake interval of the requesting STA may be equal to (TWT wake interval mantissa) × 2^{(TWT Wake Interval Exponent)}, for example, if a base of 2 is used. The nominal minimum TWT wake duration field may indicate the minimum duration of time (e.g., in units indicated by the wake duration unit subfield), that the TWT requesting STA or the TWT scheduled STA is expected to be awake to complete frame exchanges for the period of TWT wake interval. The TWT wake interval may be the average time that the TWT requesting STA or the TWT scheduled STA expects to elapse between successive TWT SPs. base 2. A flow type field in the TWT response that successfully set up a TWT agreement may indicate a type of interaction between the TWT requesting STA and the TWT responding STA within a TWT SP for that TWT agreement. The flow type field equal to 0 (or any other first value) may indicate an announced TWT. The TWT responding STA of an announced TWT agreement may not send/transmit a frame to the TWT requesting STA within a TWT SP until it has received a frame (e.g., a power save poll (PS-Poll) frame or a quality of service (QoS) null frame) from the TWT requesting STA. The flow type field equal to 1 (or any other second value) may indicate an unannounced TWT. The TWT responding STA of an unannounced TWT agreement may send/transmit a frame to the TWT requesting STA within a TWT SP before it has received a frame from the TWT requesting STA.

A TWT responding STA or a TWT scheduling AP may set a TWT protection subfield to 1 (or any other value) to indicate that the TWT SP(s) corresponding to the TWT flow identifier(s) of the TWT element may be protected. The protection may be by allocating restricted access window(s) (RAW(s)) that restrict access to the medium during the TWT SP(s) for the TWTs that are set up within a BSS (e.g., a sub-1 GHz (S1G) BSS). The protection may be by enabling network allocation vector (NAV) protection during the TWT SP(s) for the TWTs that are set up within a BSS (e.g., a high efficiency (HE) BSS).

A broadcast TWT element 600 that comprises restricted TWT parameter set field(s) is also referred to as a restricted TWT element. A restricted TWT traffic information present subfield may be set to a first value (e.g., 1, or any other value) to indicate that the restricted TWT traffic information field is present. The restricted TWT traffic information field may be present in a restricted TWT parameter set field, for example, if/when the restricted TWT traffic information present subfield of the request type field is set to the first value (e.g., 1, or any other value). A DL TID bitmap valid subfield may indicate whether a restricted TWT DL TID bitmap field has valid information. The DL TID bitmap valid subfield being set to a defined value (e.g., 0, or any other value) may indicate that DL traffic of TIDs is identified as latency sensitive traffic, and the restricted TWT DL TID bitmap field is reserved. The UL TID bitmap valid subfield may indicate whether a restricted TWT UL TID bitmap field has valid information. The UL TID bitmap valid subfield being set to a defined value (e.g., 0, or any other value) may indicate that UL traffic of TIDs is identified as latency sensitive traffic, and the restricted TWT UL TID bitmap field is reserved. The restricted TWT DL TID bitmap subfield and the restricted TWT UL TID bitmap subfield may specify the TID(s) that are identified (e.g., by the TWT scheduling AP or the TWT scheduled STA) as latency sensitive traffic streams in downlink and uplink direction, respectively. A first value (e.g., 1, or any other value) at bit position k in the bitmap may indicate that TID k is classified as latency sensitive traffic stream. A second value (e.g., 0, or any other value) at bit position k in the bitmap may indicate that TID k is not classified as latency sensitive traffic stream.

An individual TWT may be a specific time or set of times negotiated between two individual stations (e.g., two STAs, or a STA and an AP, etc.) at which the stations may be awake to exchange frames during the negotiated TWT SP. A TWT requesting STA may be a STA that requests a TWT agreement. A TWT responding STA may be a STA that respond to a TWT request. A TWT request may comprise a TWT requesting STA transmitting a frame to initiate a TWT agreement.

A TWT may be a trigger-enabled TWT, a non-trigger-enabled TWT, an announced TWT, or an unannounced TWT. In trigger-enabled TWT, an AP may send/transmit a trigger frame for scheduling uplink multi-user transmissions from one or more STAs The uplink multi-user transmissions may use/be based on uplink OFDMA and/or uplink MU-MIMO during a trigger-enabled TWT SP. A TWT STA that receives the trigger frame may send/transmit a frame during the trigger-enabled TWT SP, to the AP, via/using the resource indicated in the trigger frame. In non-trigger-enabled TWT, an AP may not be required to send/transmit a trigger frame to schedule uplink multi-user transmissions from one or more STAs during a non-trigger-enabled TWT SP.

In announced TWT, a STA may send a frame (e.g., a PS-Poll frame or a QoS null frame) to the AP to retrieve downlink buffered data from the AP during a TWT SP. In unannounced TWT, an AP may send downlink data, to an TWT STA, without receiving a frame (e.g., a PS-Poll frame, or a QoS null frame) from the TWT STA during a TWT SP.

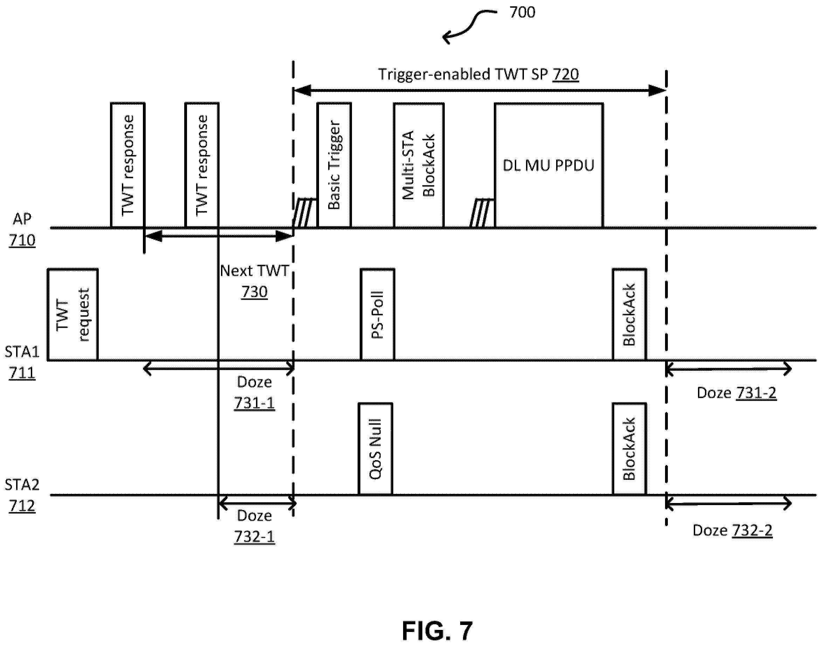

FIG. 7 shows an example of individual TWT operation. In the individual TWT operation 700, an AP 710 may be a TWT responding STA and a STA1 711 and a STA2 712 may be TWT requesting STAs. The STA1 711 may send a TWT request to the AP 710 to setup a TWT agreement (e.g.a trigger-enabled TWT agreement). The AP 710 may accept the TWT agreement with the STA1 711. The AP 710 may confirm the acceptance in/via the TWT response sent to the STA1 711. The AP 710 may send an unsolicited TWT response to the STA2 712 to set up a TWT agreement (e.g.a trigger-enabled TWT agreement) with the STA2 712. The AP 710 may send the unsolicited TWT response to the STA2 712 without receiving a TWT request from the STA2 712. TWT agreements may be set up as announced TWTs. The TWT request and/or the TWT response may comprise the TWT element 500 as shown in FIG. 5.

The STA1 711 and the STA2 712 may be in a doze state 731-1, 732-1 (e.g., after the TWT agreement setup) until a next TWT 730 as indicated in the received TWT responses. The next TWT 730 may indicate a time at which the STA1 711 and the STA2 712 may transition to an awake state. The next TWT 730 may be a time period between a TWT response and a time at which a trigger-enabled TWT SP 720 may start.

The AP 710 may send a trigger frame, for example, during a trigger-enabled TWT SP 720. The trigger-enabled TWT SP 720 may begin at the next TWT 730 as indicated in the received TWT responses. The STA1 711 and the STA2 712 may indicate (e.g., responsive to the trigger frame) that the STA1 711 and the STA2 712 are awake during the TWT SP 720. The STA1 711 may indicate that the STA1 711 is awake by sending a frame (e.g., a PS-Poll) frame. The PS-Poll frame may comprise a BSSID (e.g., a receiver address (RA)) field set to an address of an AP and a transmitter address (TA) field set to an address of the STA transmitting the frame. The STA2 712 may indicate that it is awake by sending a QoS null frame, for example, based on/in response to the trigger frame. The QoS null frame may comprise a MAC header (e.g., comprising one or more of a frame control field, a duration field, address fields, a sequence control field, and/or a QoS control field) and not comprise a frame body. The AP 710 may send a multi-STA block acknowledgment (M-BA) frame, for example, based on/in response to the PS-Poll frame and/or the QoS null frame. The M-BA frame may include acknowledgement information associated with one or more frames (e.g., PS-Poll frame and QoS null frame) received from one or more STAs. The STA1 711 and/or the STA2 712 may receive downlink bufferable units (DL BUs) from the AP 710. The DL BUs may correspond to one or more downlink MU PPDUs. A bufferable unit (BU) may be a MAC service data unit (MSDU), an aggregate MAC service data unit (A-MSDU), or a bufferable MAC management protocol data unit (MMPDU). The STA1 711 and/or the STA2 712 may send/transmit block acknowledgement (BlockAck) frames, for example, based on receiving the DL BUs. The STA1 711 and the STA2 712 may enter a doze state 731-2, 732-2 outside of the TWT SPs, respectively.

A STA may execute individual TWT setup exchanges. The STA may not send/transmit frames to an AP outside of negotiated TWT SPs. The STA may not transmit frames that are not contained within high efficiency trigger-based PPDUs (HE TB PPDUs) to the AP within trigger-enabled TWT SPs. The STA may transmit, to the AP, frames that are contained within HE TB PPDUs within trigger-enabled TWT SPs. The HE TB PPDU may be transmitted by a STA based on receiving of a trigger frame triggering uplink multi-user transmission. The AP of a trigger-enabled TWT agreement may schedule for transmission of a trigger frame for the STA within the trigger-enabled TWT SP. A STA may transmit an HE TB PPDU, for example, based on/in response to a trigger frame sent during the trigger-enabled TWT SP. A STA that is in power save (PS) mode may include a frame (e.g., PS-Poll frame or a QoS null frame) in the HE TB PPDU if the TWT is an announced TWT. The frame may indicate, to the AP, that the STA is currently in the awake state. The AP receiving the frame (e.g., the PS-Poll frame or the QoS Null frame or any other indication from a STA in PS mode), may send data (e.g., BUs) to the STA. The AP may send as many buffered BUs as may be available at the AP during the TWT SP.

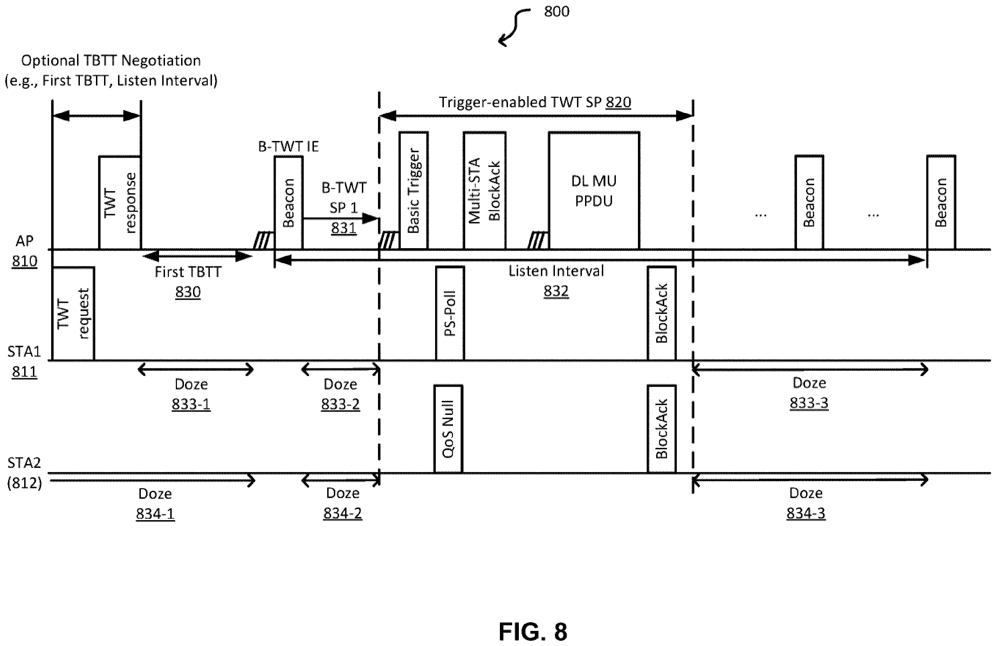

FIG. 8 shows an example of broadcast TWT operation. A broadcast TWT may be a specific time or a set of times at which one or more STAs may be awake to exchange frames with the AP (e.g., during a broadcast TWT SP). The broadcast TWT may be indicated/broadcasted by the AP to the one or more STAs.

An AP 810 and one or more STAs 811, 812 may operate as per the broadcast TWT operation 800. The AP 810 may be a TWT scheduling AP, and the STA1 811 and/or the STA2 812 may be TWT scheduled STAs. The AP 810 may send/broadcast a beacon frame (e.g., to the one or more STAs 811, 812). The AP 810 may send/include a broadcast TWT element (B-TWT information element (IE)) in the beacon frame. The broadcast TWT element may be the TWT element 600 as shown in FIG. 6. The broadcast TWT element may indicate a broadcast TWT SP. The broadcast TWT element may comprise an indication of time 831 at which the broadcast TWT SP may start. The broadcast TWT SP may be a trigger-enabled TWT SP 820. The AP 810 may send trigger frames and/or DL BUs to the STA1 811 and the STA2 812, for example, during the broadcast TWT SP. Beacon frames may be sent by the AP 810 at regular intervals. The regular intervals may be defined based on a target beacon transmission time (TBTT). The TBTT may indicate times at which beacon frames may be sent/transmitted. For example, a time period between transmissions of successive beacon frames by the AP 810 may be based on a TBTT. The TBTT may be a time interval measured in time units (TUs). A TU may be equal to 1024 microseconds (or any other time interval). The STA1 811 and the STA2 812 may be in a doze state 833-1, 834-1 until a first TBTT 830. The STA1 811 and the STA2 812 may wake up to receive the beacon frame at the TBTT 830 and determine the broadcast TWT. The STA1 811 and the STA2 812 may wake up periodically to receive beacon frames. A time period between successive reception of beacon frames at a STA may be defined based on a listen interval for the STA. A TWT request and/or a TWT response, as shown in FIG. 8, may be used to negotiate one or more parameters (e.g., the first TBTT 830, a listen interval 832) for the broadcast TWT operation.

The STA1 811 and/or the STA2 812 may be in the doze state 833-2, 834-2 until the trigger-enabled TWT SP 820 starts (e.g., at time 831). The STA1 811 and/or the STA2 812 may be in the doze state 833-2, 834-2, for example, after the reception of a broadcast TWT element in the beacon frame. The AP 810 may send a basic trigger frame to the STA1 811 and/or the STA2 812, for example, during the trigger-enabled TWT SP 820. The STA1 811 may indicate that it is awake by sending a frame (e.g., a PS-Poll frame), for example, based on/in response to receiving the basic trigger frame. The STA2 812 may indicate that it is awake by sending a frame (e.g., a QoS null frame), for example, based on/in response to receiving the basic trigger frame. The AP 810 may send a multi-STA block acknowledgment (M-BA) frame, for example, based on/in response to the frames (e.g., the PS-Poll frame and/or the QoS null frame) from the STA1 811 and/or STA2 812. The STA1 811 and/or the STA2 812 may receive DL BUs from the AP 810, for example, after the M-BA frame and based on/in response to the frames (e.g., the PS-Poll frame and/or the QoS null frame) from the STA1 811 and/or STA2 812. The STA1 811 and/or the STA2 812 may send/transmit block acknowledgement (BlockAck) frames, for example, based on receiving the DL BUs. The STA1 811 and the STA2 812 may go to the doze state 833-3, 834-3 outside of the TWT SP.

A STA that intends to operate in power save mode (e.g., the STA1 811), may send/transmit a TWT request to the AP 810. The TWT request may identify a TBTT (e.g., wake TBTT) of the first beacon frame and a wake interval between subsequent beacon frames it intends to receive (e.g., the listen interval 832). The AP 810, receiving the TWT request from the STA1 811, may respond with a TWT response (e.g., accepting the TWT request). The STA1 811 may be in a doze state until a (next) negotiated TBTT 830, for example, after successful completion of negotiation (e.g., of the TBTT and the listen interval 832). The STA1 811 may be in an awake state to receive/listen to beacon frames sent/transmitted at the negotiated wake TBTTs 830. The STA1 811 may enter a doze state (e.g., until the next TBTT, for a time period equal to the listen interval 832), for example, if the STA 811 receives a beacon frame at/after the TBTT 830. The STA1 811 may enter the doze state (e.g., following reception of a beacon frame) unless a TIM element (e.g., in the beacon frame) comprises a positive indication for the STA1 811. The STA1 811 may go to the doze state, for example, after a nominal minimum TBTT wake duration time has elapsed (e.g., as measured from the TBTT start time). The STA2 812 (e.g., that has not negotiated the TBTT) may wake up to listen to/receive a beacon frame comprising the TWT element. The STA2 812 may be in the doze state at the TBTT. The STA2 812 may not receive a beacon frame unless the STA2 812 is configured to wake up at every TBTT to receive beacon frames. The STA2 812 may not receive a beacon frame, for example, if the STA2 812 is in a doze state at the TBTT.

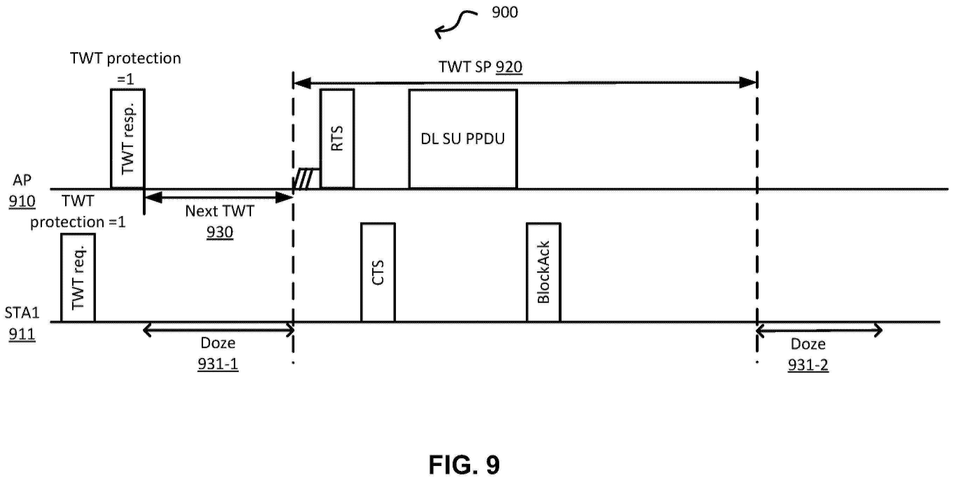

FIG. 9 shows an example of TWT protection in individual TWT operation. A network allocation vector (NAV) may be an indicator of time periods during which transmissions via a wireless medium (WM) may not initiated be by a STA. The STA may not initiate transmissions within the time periods regardless of whether or not the STA's clear channel assessment (CCA) function senses that the WM may be clear/available. The NAV may be maintained by the STA. A STA that may receive at least one valid frame, in a PSDU, may update a NAV using information from any valid duration field in the PSDU. The STA may update the NAV, for example, if a value of a received duration field is greater than the STA's current NAV value.

The TWT protection 900, as shown in FIG. 9, may be used by a STA1 911. The TWT protection 900 may be used to protect a TWT session from external transmissions by other STAs. A STA, during a TWT SP, that initiates a transmission opportunity (TXOP) to send/transmit a frame may send a request to send (RTS) frame or a clear to send (CTS) frame to protect the TWT session. The RTS frame or the CTS frame may protect the TWT session by appropriately setting NAVs of other STAs. Other STAs may set respective NAVs based on receiving the RTS frame and/or the CTS frame. The RTS frame may comprise a frame control field, a duration field, a receiver address (RA) field, a transmitter address (TA) field, and/or a frame check sequence (FCS) field. The CTS frame may comprise a frame control field, a duration field, a receiver address (RA) field, and/or a frame check sequence (FCS) field. A STA may send a CTS frame in response to a received RTS frame.

The TWT protection field, in a TWT element, may indicate whether a TWT is protected or unprotected. A TWT requesting STA (e.g., the STA 911) may set the TWT protection field to a first value (e.g., 1, or any other value) to request a TWT responding STA (e.g., AP 910) to provide protection for a set of TWT SPs. A TWT protection field equal to the first value may indicate usage of a NAV protection mechanism to protect access to the medium during/within the corresponding TWT SPs.

The STA1 911 may set the TWT protection field, in a TWT request frame to the first value (e.g., 1) to request the TWT responding STA (e.g., AP 910) to provide protection of the set of TWT SPs using a NAV protection mechanism. The AP 910 may set the TWT protection field, in a TWT response frame, to the first value (e.g., 1) to indicate the TWT SPs will be protected using a NAV protection mechanism. The STA may be in a doze state 931-1 until a next TWT 930, for example, following the reception of the TWT response frame. The AP 910 that may have set the TWT protection field to the first value (e.g., 1) may send a NAV setting frame approximately at the start of the TWT SP 920. For example, the NAV setting frame may be an RTS frame or a CTS frame. A STA that receives a NAV setting frame with a receiver address (RA, e.g., Address 1) field (e.g., in a MAC header of the NAV setting frame) that does not match a MAC address of the STA may set its NAV upon reception of the NAV setting frame and may not access the medium for a specified amount of time (e.g., as determined based on the NAV setting frame). Otherwise, the STA may send a CTS frame in response to the NAV setting frame. The STA 911 that receives the RTS frame and responds with the CTS frame may be scheduled to access the medium during the TWT SP 920. The AP 910 may send a downlink frame to the STA 911, for example, based on receiving the CTS frame. The AP may receive a block acknowledgment (e.g., BlockAck) frame (e.g., from the STA 911), for example, based on/in response to sending the downlink frame to the STA 911. The STA 911 may transition to a doze state 931-2, for example, based on/after an end of the TWT.

Traffic originating from many real time applications may have stringent latency requirements (e.g., low average latency and/or worst-case latency of the order of a few to tens of milliseconds, low jitter, etc.). The traffic may also be associated with certain reliability constraints. Traffic with stringent latency and/or reliability requirements may be referred to as latency sensitive traffic. Restricted TWT operation may allow an AP to use procedures (e.g., enhanced medium access protection and/or resource reservation mechanisms) to provide more predictable latency, reduced worst case latency, reduced jitter, and/or higher reliability for latency sensitive traffic.

A STA may negotiate (e.g., using TWT operations) awake periods with an AP to send and/or receive data packets. The STA may save its power outside the awake periods (e.g., by remaining in a doze state). TWT operation may lead to low power consumption for the participating STAs. TWT also may reduce contention level, and may support a collision-free and/or deterministic operation (e.g., in scenarios where the STAs are distributed over different TWT sessions).

An AP may, using restricted TWT (r-TWT) operation, allocate r-TWT SP(s). The r-TWT SP(s) may be used for transmission of data frame(s) comprising latency sensitive traffic (e.g., by the AP and/or one or more STAs). A data frame with latency sensitive traffic may be identified/indicated using r-TWT traffic information in an individual frame (e.g., TWT request frame or TWT response frame) or a broadcast frame (e.g., a beacon frame, probe response frame, etc.) sent by the AP. The r-TWT traffic information may comprise TIDs bitmaps for uplink and downlink traffic streams that may comprise latentcy sensitive traffic. A data frame with a TID that is not identified as latency sensitive traffic may not be transmitted during an r-TWT SP.

An r-TWT scheduling AP may be an extremely high throughput AP (EHT AP) that may support r-TWT operation. An r-TWT scheduled STA may be a non-AP EHT STA that may support r-TWT operation. The EHT AP may announce a r-TWT SP schedule information in a broadcast TWT element, for example, if an r-TWT agreement has been set up. Management frames (e.g., a beacon frame and/or a probe response frame) may comprise the broadcast TWT element. The EHT AP may schedule a quiet interval that overlaps with an r-TWT SP. A service interval within the r-TWT SP overlapping the quiet interval may have a duration (e.g., 1 TU, or any other time period). The service interval may start at the same time as the corresponding r-TWT SP. Overlapping quiet intervals may be scheduled by including one or more quiet elements in a beacon frame and/or a probe response frame. The overlapping quiet intervals may be scheduled such that legacy STAs may not initiate a frame transmission during the quiet interval overlapping with the r-TWT SP.

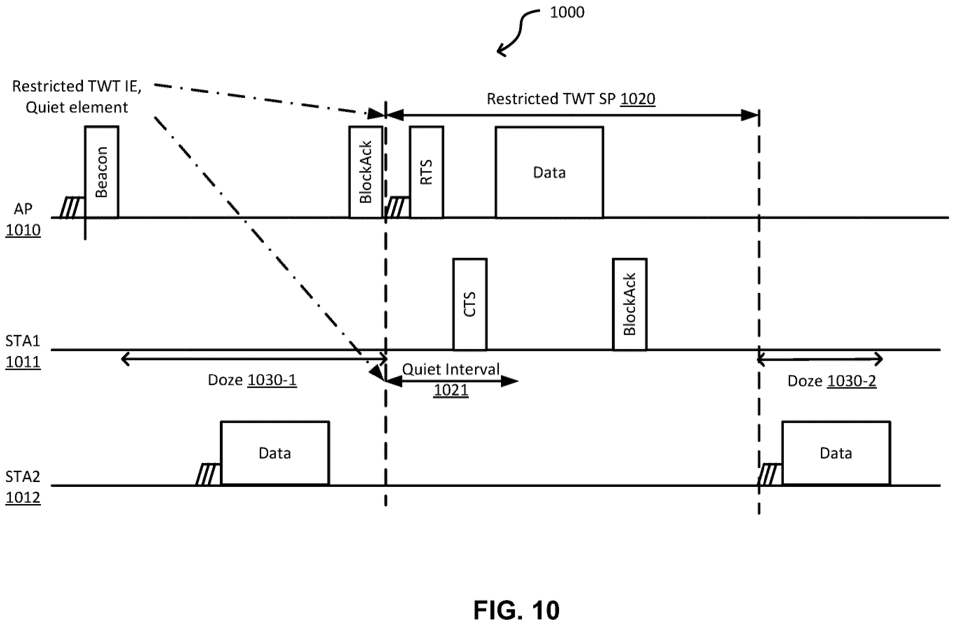

FIG. 10 shows an example r-TWT operation. An AP 1010, in the r-TWT operation 1000, may be an r-TWT scheduling AP. A STA1 1011 may be an r-TWT scheduled STA. A STA2 1012 may or may not be an r-TWT scheduled STA. For example, a STA2 1012 that is not an TWT scheduled STA may be a legacy STA or may be an EHT STA that is not scheduled by the AP 1010 during an r-TWT SP 1020. The AP 1010 may send/transmit a beacon frame comprising a TWT element. The TWT element may indicate an r-TWT SP (e.g., the r-TWT SP 1020) such as a start time of the r-TWT SP and a duration of the r-TWT SP. TIDs of traffic that is allowed to be transmitted during the r-TWT SP may be negotiated by the AP 1010 and the STA 1 1011 that exchanges TWT request frame and TWT response frame that are carrying TWT element for the r-TWT SP. The TWT element may comprise a quiet element indicating a quiet interval 1021. The AP 1010 may send/transmit a latency sensitive DL BU to the STA1 1011 within/during the r-TWT SP 1020. The STA2 1012, that has received the beacon frame, may send/transmit a data frame with a TID different from the indicated in the TWT element in the beacon frame. The STA2 1012 may send/transmit the data frame, for example, before the start of the r-TWT SP 1020. The STA1 1011 may be in a doze state 1030-1 until (e.g., before) the start of the r-TWT SP 1020. The STA2 1012 may end its transmission before the start of the r-TWT SP 1020. The AP 1010 and the STA1 1011 may exchange an RTS frame and a CTS frame, for example, during the r-TWT SP 1020. The STA2 1012 may not access the channel (e.g., using enhanced distributed channel access (EDCA)) at least during the quiet interval 1021 indicated in the beacon frame. The AP 1010 may send, to the STA1 1011, a data frame with a TID indicated as latency sensitive traffic (e.g., indicated in the beacon frame) during the r-TWT SP 1020. The STA2 1012 may resume its transmission, for example, if/after the r-TWT SP 1020 ends and/or if/after at least the quiet interval 1021 ends. For example, the STA2 1012 may send a data frame, for example, after the r-TWT SP 1020. The STA1 1011 may enter a doze state 1030-2, for example, after the r-TWT SP 1020.

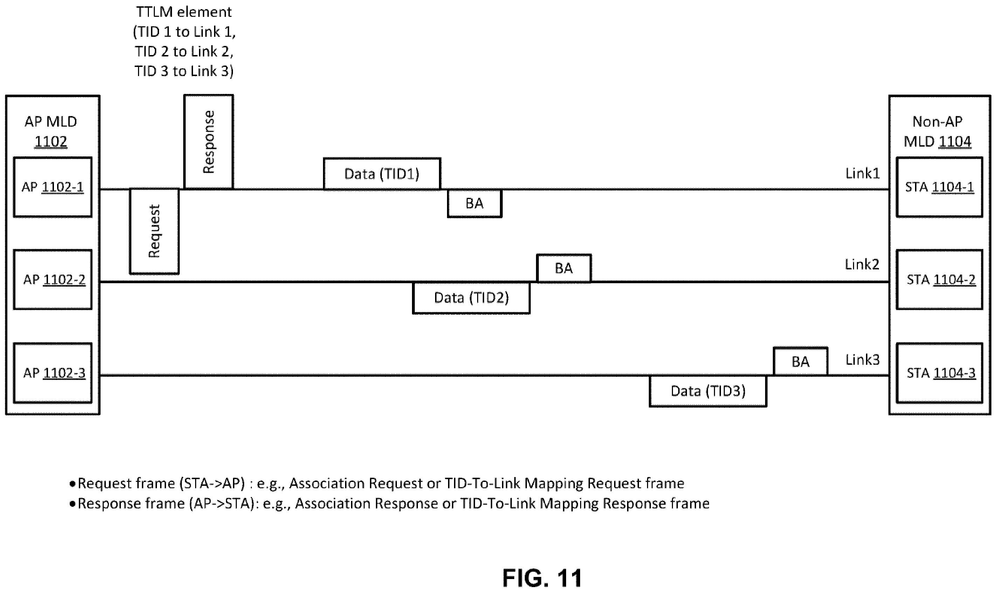

FIG. 11 shows an example negotiation of TID-to-link mapping. The TID- to-link mapping may be for traffic between two or more multi-link devices (MLDs). An AP 1102-1, an AP 1102-2 and an AP 1102-3 may be affiliated with an AP MLD 1102. A STA 1104-1, a STA 1104-2 and a STA 1104-3 may be affiliated with a non-AP MLD 1104.

The STA 1104-1 may send/transmit, to the AP 1102-1, a request frame (e.g., via a link 1). The AP 1102-1 may send/transmit a response frame, to the STA 1104-1, via the link 1, for example, based on/in response to the request frame.

The request frame may be at least one of an association request frame and/or a TID-to-link mapping request frame. The response frame may be at least one of an association response frame and/or a TID-to-link mapping response frame. The request frame may indicate one or more TID-to-link mapping requests.

The request frame and/or the response frame may comprise a TID-to-link mapping (TTLM) element. The TTLM element may indicate a mapping between one or more TIDs and one or more links. For example,the TTLM element may comprise information indicating mapping of a TID 1 to a link 1, mapping of a TID 2 to a link 2, and/or mapping of a TID 3 to a link 3. Link 1 may correspond to a link between the AP 1102-1 and the STA 1104-1. Link 2 may correspond to a link between the AP 1102-2 and the STA 1104-2. Link 3 may correspond to a link between the AP 1102-3 and the STA 1104-3.

The response frame may indicate an acceptance of all TID-to-link mapping requests indicated in the request frame. The response frame may indicate the acceptance of at least some of the TID-to-link mapping requests indicated in the request frame. The response frame may indicate rejection of at least some, or all, TID-to-link mapping requests indicated in the request frame.

Data with the TID 1 may be transmitted (e.g., by the AP 1102-1 or the STA 1104-1) via the link 1. Data with the TID 2 may be transmitted (e.g., by the AP 1102-2 or the STA 1104-2) via the link 2. Data with the TID 3 may be transmitted (e.g., by the AP 1102-3 or the STA 1104-3) via the link 3. The data may be sent by the AP or the STA. A receiver of data may send/transmit an acknowledgement frame (e.g., a block acknowledgment (BA) frame, an acknowledgment frame (Ack)), for example, based on/in response to the received data. For example, the STA 1104-1 (or the AP 1102-1) may send an acknowledgement frame for data with the TID 1. The STA 1104-2 (or the AP 1102-2) may send an acknowledgement frame for data with the TID 1. The STA 1104-3 (or the AP 1102-3) may send an acknowledgement frame for data with the TID 1.

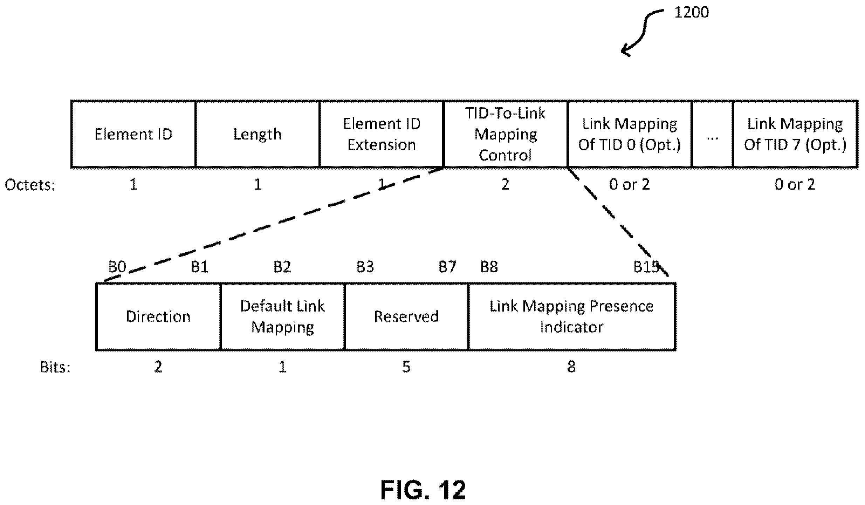

FIG. 12 shows an example TID-to-link mapping element. The example TID-to-link mapping element 1200 as shown in FIG. 12 may be used for supporting TID-to-link mapping operation. The TID-to-link mapping element 1200 may be included in a frame (e.g., at least one of an association request frame, an association response frame, a TID-to-link mapping request frame and/or a TID-to-link mapping response frame). The TID-to-link mapping element 1200 may comprise one or more of: a TID-to-link mapping control field indicating control information for a TID-to-link mapping and/or one or more link mapping field(s) for TID(s) *n* (where *n* may be equal to 0, 1, 2, 3, 4, 5, 6, 7, or any other value). The link mapping field(s) may indicate link(s) via which frames corresponding to a TID n may be allowed to be sent. A first value (e.g., 1, or any other value) in bit position *i,* of the link mapping field for TID *n,* may indicate that the TID *n* may be mapped to the link associated with the link ID *i* (e.g., for a direction as specified in a direction subfield). The link mapping field for TID n may not be present, for example, if a default link mapping subfield is set to defined value (e.g., 1, or any other value).

The TID-to-link mapping control field may comprise at least one of: a direction subfield, a default link mapping subfield, and/or a link mapping presence indicator subfield. The direction subfield may indicate whether the TID-to-link mapping may be for a downlink, an uplink, or a bidirectional link. The direction subfield may be set to a first value (e.g., 0, or any other first value) if the TID-to-link mapping element provides TID-to-link mapping information for frames transmitted on the downlink. The direction subfield may be set to a second value (e.g., 1, or any other second value) if the TID-to-link mapping element provides TID-to-link mapping information for frames transmitted on the uplink. The direction subfield may be set to a third value (e.g., 3, or any other third value) if the TID-to-link mapping element provides TID-to-link mapping information for frames that may be transmitted either on the downlink and/or the uplink (e.g., bidirectionally). The third value (e.g., 3) may be reserved. The default link mapping subfield may indicate (e.g., be set to 1, or any other defined value) if the TID-to-link mapping element represents default TID-to-link mapping.

The link mapping presence indicator subfield may indicate whether the link mapping field for TID n may be present in the TID-to-link mapping element. A first value (e.g., 1, or any other value) in bit position n of the link mapping presence indicator subfield may indicate that the link mapping field for TID n may be present in the TID-to-link mapping element. Otherwise, the link mapping of TID *n* field may not be present in the TID-to-link mapping element. The link mapping presence indicator subfield may be reserved, for example, if the default link mapping subfield is set to the first value

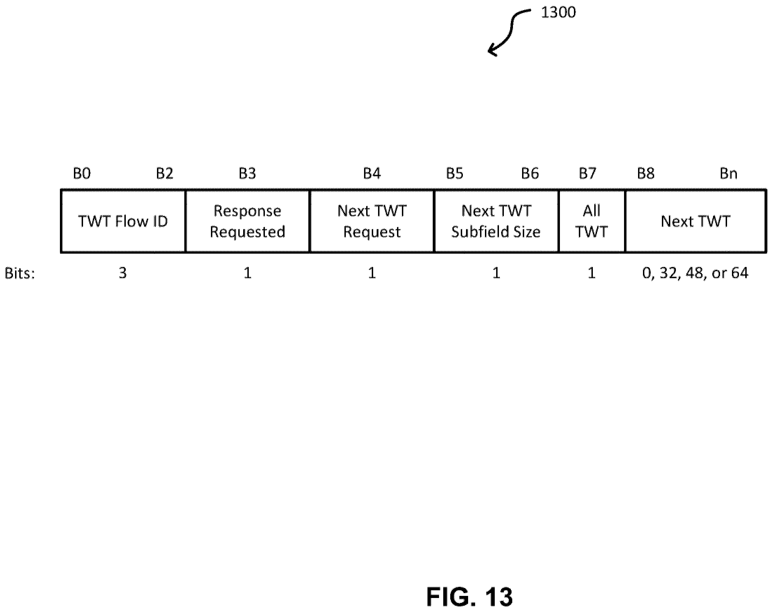

FIG. 13 shows an example TWT information field. The example TWT information field 1300 shown in FIG. 13 may be for supporting a TWT information frame transmission and flexible TWT. The TWT information field may be included in a TWT information frame.

The TWT information field 1300 may comprise at least one of: a TWT flow ID subfield, a response requested subfield, a next TWT request subfield, a next TWT subfield size subfield, an all TWT subfield, and/or a next TWT subfield. The TWT flow ID subfield may comprise/indicate a TWT flow ID for which TWT information may be requested or provided. The TWT flow ID subfield may be reserved if the all TWT subfield is set to a defined value (e.g., 1, or any other defined value).

The response requested subfield may indicate whether a transmitter of a TWT information frame containing the TWT information field 1300 may be requesting another TWT information frame to be sent/transmitted based on/in response to receiving the TWT information frame. The response requested subfield may be set to a first value (e.g., 0, or any other first value) to request a recipient to not transmit a TWT information frame in response to receiving the TWT information frame. The response requested subfield may be set to a second value (e.g., 1, or any other second value) to request the recipient to transmit a TWT information frame in response to receiving the TWT information frame.

The next TWT request subfield may be set to a first value (e.g., 1, or any other first value) to indicate that the TWT information frame may be a request for a delivery of a TWT information frame containing a nonzero length next TWT field. Otherwise, the TWT request subfield may be set to a second value (e.g., 0, or any other second value). The next TWT subfield size subfield may indicate a size of the next TWT subfield.

The all TWT subfield may be set to a first value (e.g., 1, or any other first value) to indicate that the TWT information frame 1300 is for rescheduling all TWTs.The all TWT subfield may be set to a second value (e.g., 0, or any other second value) to indicate that the TWT information frame 1300 is not for rescheduling all TWTs. The all TWT subfield may be set to a value by an HE STA.

The next TWT subfield may be of a variable size as determined based on an indication in the next TWT subfield size subfield. The next TWT subfield may indicate a least significant portion of a TSF, at the next TWT, for a TWT SP specified by the TWT flow ID subfield.

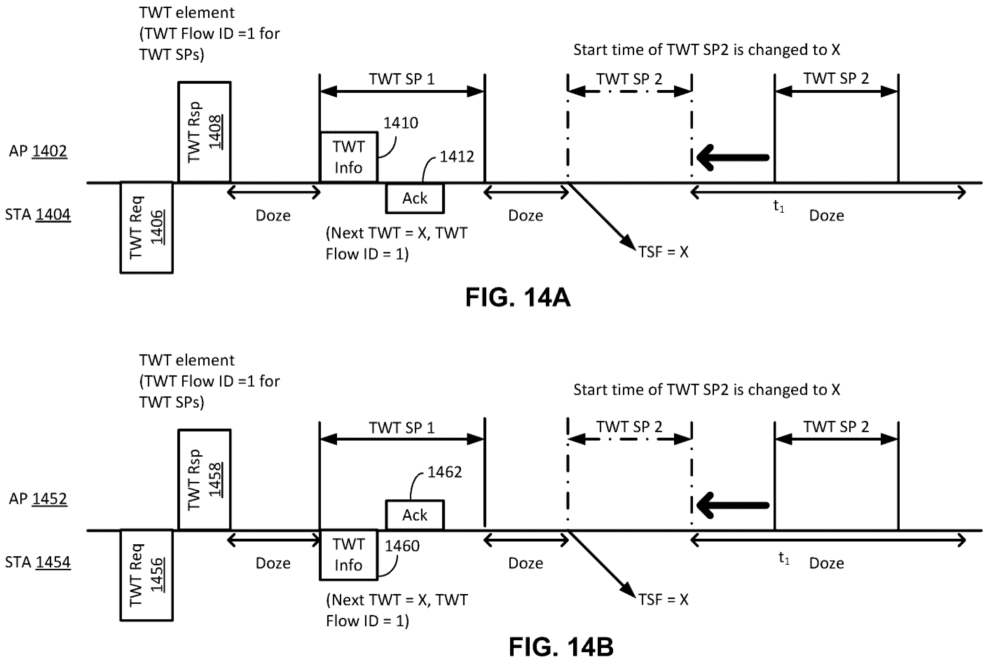

FIG. 14A shows an example of a flexible TWT as configured by an AP. Flexible TWT configuration may be used to modify a TWT SP. A STA 1404 may send/transmit a TWT setup request frame 1406 to an AP 1402 to initiate TWT agreements. The TWT agreements may be for a TWT SP 1 and/or a TWT SP 2. The AP 1402 may transmit a TWT setup response frame 1408 to the STA 1404, for example, based on/in response to the TWT setup request frame.

A TWT flow ID field (e.g., in the TWT setup request frame 1406 and/or the TWT setup response frame 1408) may be set to a first value (e.g., 1, or any other value) for the TWT SP 1 and/or TWT SP 2. The STA 1404 may be in a doze state outside the TWT SP 1 and/or outside the TWT SP 2.

The AP 1402 may send/transmit TWT information frame 1410, to the STA 1404, to reschedule the TWT SP 2. The AP 1402 may transmit the TWT information frame 1410 during the TWT SP 1. A next TWT subfield, of the TWT information frame 1410, may be set to a value (e.g., X) of a TSF. The next TWT subfield may indicate a (new) start time of the TWT SP 2 (e.g., the next TWT SP).

The STA 1404 may replace a start time t₁ of the TWT SP 2 (e.g., the first upcoming TWT SP) with a value (e.g., X) contained in/based on the next TWT subfield of the TWT information frame 1410. The value may correspond to/be based on a value indicated by the next TWT subfield of the TWT information frame 1410. The STA 1404 may send an acknowledgment frame 1412, for example, based on/in response to receiving the TWT information frame 1410.

The STA 1404 may preserve a power management (PM) mode from the time the TWT information frame 1410 is received to the time indicated in the next TWT subfield of the TWT information frame 1410. The STA 1404 may transition to an awake state at a time (e.g., X) indicated in the next TWT subfield.

FIG. 14B shows an example of a flexible TWT as configured by a STA. Flexible TWT configuration may be used to modify a TWT SP. A STA 1454 may send/transmit a TWT setup request frame 1456 to an AP 1452. The TWT request frame 1406 may be for initiating a TWT agreement for a TWT SP 1 and a TWT SP 2. The AP 1452 may send/transmit a TWT setup response frame 1458 to the STA 1454, for example, based on/in response to the TWT setup request frame 1456. A TWT flow ID (e.g., in the TWT setup request frame 1406 and/or the TWT setup response frame 1408) may be set to a first value (e.g., 1, or any other value) for the TWT SP 1 and the TWT SP 2. The STA 1454 may be in a doze state outside the TWT SP 1 and/or the TWT SP 2.

The STA 1454 may send/transmit a TWT information frame 1460 to the AP 1452 to reschedule the TWT SP 2. The STA 1454 may send/transmit a TWT information frame 1460, for example, during the TWT SP 1. The AP 1452 may transmit, to the STA 1454, an acknowledgement frame 1462 (e.g., an ack frame or a BA frame), for example, based on/in response to receiving the TWT information frame 1460.

A next TWT subfield of the TWT information frame 1460 may be set to a value (e.g., X). The next TWT subfield may indicate/correspond to a (new) start time of the TWT SP 2 (i.e., a next TWT SP). The STA 1454 may replace a start time t₁ of the TWT SP 2 (e.g., the first upcoming TWT SP) with a value (e.g., X) contained in the next TWT subfield of the TWT information frame.

The STA 1454 may preserve the PM mode from a time the TWT information frame 1460 is sent to a time indicated in the next TWT subfield of the TWT information frame 1460. The STA 1454 may transition to an awake state at a time (e.g., X) indicated in the next TWT subfield.

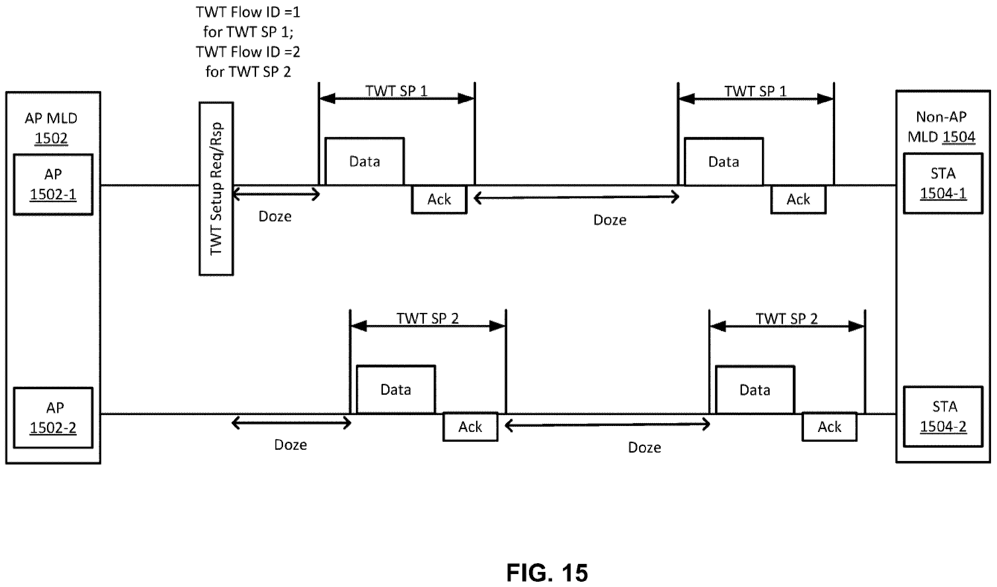

FIG. 15 shows an example of multi-link (ML) TWT setup. An AP 1502-1 and an AP 1502-2 may be affiliated with an AP MLD 1502. A STA 1504-1 and a STA 1504-2 may be affiliated with a non-AP MLD 1504.

The STA 1504-1 may send/transmit a TWT setup request frame to the AP 1502-1 via a link 1. The AP 1502-1 may send/transmit a TWT setup response frame to the STA 1504-1, via the link 1, for example, based on/in response to the TWT setup request frame. The TWT setup request frame and/or the TWT setup response frame may indicate TWT SPs (e.g., a TWT SP 1) of a link 1 and/or TWT SPs (e.g., a TWT SP 2) of a link 2.

A TWT flow ID, for the TWT SPs (e.g., TWT SP 1), in the TWT setup request frame and/or the TWT setup response frame may be set to a first value (e.g., 1, or any other first value). A TWT flow ID, for the TWT SPs (e.g., TWT SP 2), in the TWT setup request frame and/or the TWT response frame may be set to a second value (e.g., 2, or any other second value). The STA 1504-1 may be in a doze state during outside the TWT SP 1. The STA 1504-2 may be in a doze state during outside the TWT SP 2.

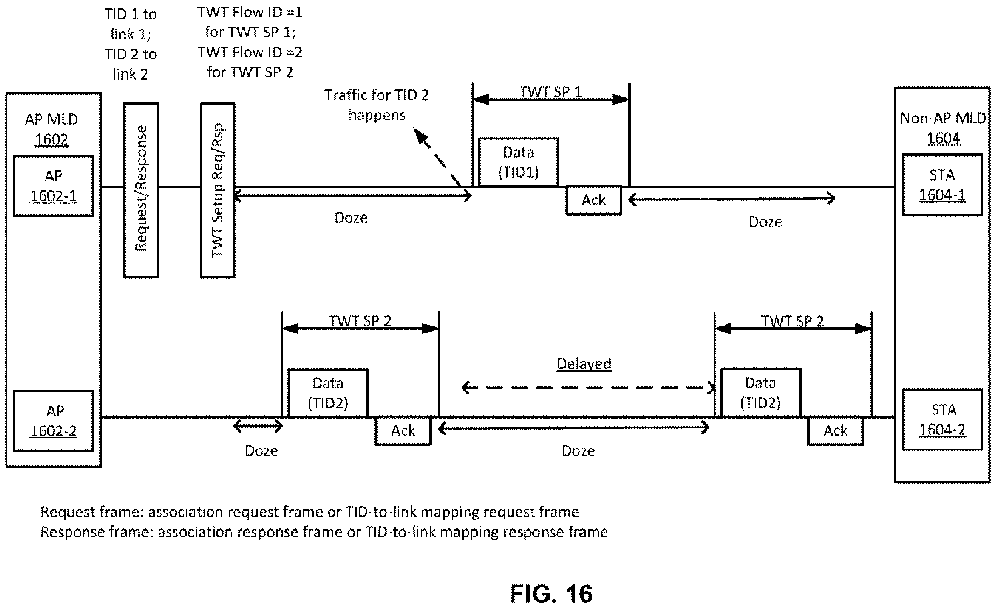

FIG. 16 shows an example delay of traffic in multi-link transmission. An AP 1602-1 and an AP 1602-2 may be affiliated with an AP MLD 1602. A STA 1604-1 and a STA 1604-2 may be affiliated with a non-AP MLD 1602.

The STA 1604-1 may send/transmit, to the AP 1602-1, a request frame via a link 1. The AP 1602-1 may send/transmit a response frame to the STA 1604-1, for example, based on/in response to the request frame. The request frame may be at least one of an association request frame and/or a TID-to-link mapping request frame. The response frame may be at least one of an association response frame and/or a TID-to-link mapping response frame.

The request frame and/or the response frame may comprise a TTLM element. The TTLM element may comprise information indicating mapping of a TID 1 to a link 1 and/or mapping of a TID 2 to a link 2.

The response frame may indicate an acceptance or rejection of one or more TTLM requests. The response frame may indicate the acceptance of all TTLM requests indicated in the request frame. The response frame may indicate the acceptance of one or more of all TTLM requests indicated in the request frame. The response frame may indicate the rejection of at least one or all TTLM requests indicated in the request frame.

Data for the TID 1 may be sent/transmitted via the link 1. Data for the TID 2 may be sent/transmitted via the link 2. A receiver of data may send/transmit a corresponding acknowledgement frame (e.g., a BA frame, an ack frame), for example, based on/in response to the received data.

The STA 1604-1 may send/transmit a TWT setup request frame to the AP 1602-1 via a link 1. The AP 1602-1 may send a TWT setup response frame to the STA 1604-1, via the link 1, for example, based on/in response to the TWT setup request frame. The TWT setup request frame and/or the TWT setup response frame may indicate a TWT SP 1 of a link 1 and/or the TWT SP 2 of the link 2.

A TWT flow ID for the TWT SP 1, in the TWT setup request frame and/or the TWT setup response frame, may be set to a first value (e.g., 1, or any other first value). A TWT flow ID for the TWT SP 2 in the TWT setup request frame and/or the TWT setup response frames may be set to a second value (e.g., 2, or any other second value).

The STA 1 may be in a doze state during outside the TWT SP 1. The STA 2 may be in a doze state during outside the TWT SP 2.

The AP MLD 1602 may have data (e.g., one or more BUs), for the TID 2, of the non-AP MLD 1604 outside the TWT SP 2. The non-AP MLD 1604 may have data (e.g., one or more BUs), for the TID 2, of the AP MLD 1602 outside the TWT SP 2. The data may not be sent/transmitted to the non-AP MLD 1604 or the AP MLD 1602 until the start of the next TWT SP 2. The transmission of the data may be delayed until the start of the next TWT SP 2. The data may correspond to latency sensitive traffic. A long delay in transmission of the data may result in dropping (e.g., not transmitting) the data from a queue at the AP MLD 1602.

Communications comprising multi-link traffic may be delayed in at least some scenarios (e.g., as described with respect to FIG. 16). Communication delay may result from a TID being mapped to only one link among multiple links. For example, a TID 1 may be mapped to a first link and a TID 2 may be mapped to a second link (and/or any quantity of TIDs may be mapped to one or more respective links, etc.). Traffic corresponding to the TID 1 mapped to the first link may arrive (e.g., be available for transmission by a transmitter), for example, after a TWT SP for the TID 1, or toward the end of the TWT SP for the TID 1. Traffic, for the first link, that may be available towards an end of an SP or outside a SP may need to be sent during a next TWT SP of the first link or otherwise it may be discarded. Delay and/or dropping of latency sensitive traffic may result in reduced service quality.

As described herein, a communication device (e.g., a non-AP MLD and/or an AP MLD) may send, via a first link, an indication to reschedule one or more transmissions via a second link (or any other link(s)). Rescheduling one or more transmissions may comprise advancing a transmission to avoid delaying latency sensitive traffic on a second link. For example, a STA of an MLD may send/transmit, via a first link, a message (e.g., TWT information frame) to reschedule a next TWT SP of a second link. The message may comprise link ID information to indicate a link on which the rescheduled TWT SP is assigned.

An AP MLD may send/transmit, to a non-AP MLD and via a link, a frame (e.g., a response frame). The frame may indicate configuration of a TWT SP of another link, of a plurality of links, between the AP MLD and non-AP MLD. The AP MLD may send/transmit, via a first link of the plurality of links, a first frame indicating rescheduling of a TWT SP of a second link. The first frame may comprise link ID information of the second link and updated timing information for the TWT SP of the second link. The AP MLD may receive, via a first link of the plurality of links, a second frame indicating rescheduling of the TWT SP for the second link. The second frame may comprise a link ID information of the second link and updated timing information for the TWT SP of the second link. Various examples are provided herein for an AP MLD and/or a non-AP MLD to reschedule, via a link of a plurality of links, a TWT SP of another link of the plurality of links. Rescheduling of a TWT SP of a link may provide advantages for multi-link transmission, such as reduced traffic latency and/or reduced dropping/discarding of traffic.

An AP MLD may send/transmit, to a non-AP MLD, at least one response frame. The at least one response frame may indicate at least one of: a mapping of a first TID to a first link between a first STA of the non-AP MLD and a first AP of the AP MLD, a mapping of a second TID to a second link between a second STA of the non-AP MLD and a second AP of the AP MLD, and/or a configuration of a TWT SP of the second link.

An AP MLD may determine that the AP MLD has data (e.g., BUs) of the second TID for transmission at a time that is outside the TWT SP of the second link. The AP MLD may send/transmit, to the non-AP MLD and via the first link, a first frame indicating rescheduling of the TWT SP of the second link. The first frame may comprise link ID information of the second link and updated timing information for the TWT SP of the second link. The AP MLD may receive, from the non-AP MLD, an acknowledgement in response to transmitting the first frame.

The AP MLD may receive, from the non-AP MLD, via the first link at least one request frame. The at least one request frame may comprise parameters indicating at least one of: a mapping of the first TID to the first link, a mapping of the second TID to the second link, and/or a configuration of the TWT SP of the second link.

The at least one response frame may accept the parameters included in the at least one request frame. The response frame may indicate an acceptance or rejection of one or more TTLM requests. The at least one response frame may indicate an acceptance of all TTLM requests indicated in the at least one request frame. The at least one response frame may indicate the acceptance of one or more of all TTLM requests indicated in the at least one request frame. IThe at least one response frame may indicate the rejection of at least one or all TTLM requests indicated in the at least one request frame.

The AP MLD may receive, from the non-AP MLD and via the first link, a second frame indicating rescheduling of the TWT SP for the second link. The second frame may comprise at least one of the link ID information of the second link and/or the updated timing information for the TWT SP of the second link. The AP MLD may send/transmit, to the non-AP MLD and via the first link, an acknowledgement in response to the second frame.

A first frame and/or a second frame further comprise a link ID information type. The TWT SP of the second link may be at least one of an individual TWT SP, a broadcast TWT SP, and/or a restricted TWT SP. The TWT SP of the second link may be a first upcoming TWT SP among TWT SPs of the second link. The first frame and/or the second frame may be sent during a TWT SP of a first link.

The first frame and/or the second frame may be at least one of an action frame and/or an enhanced action frame. The action frame may be an unprotected S1G action frame (e.g., a TWT information frame). The enhanced action frame may be at least one of an unprotected S1G action frame or an EHT action frame. The rescheduling of the TWT SP of the second link may comprise replacing a start time of the TWT SP of the second link ith a time indicated in the first frame and/or the second frame.

The first frame and/or the second frame may comprise a TWT information field. The updated timing information, and/or a TWT information field of the first frame and/or the second frame may comprise at least one of: a TWT flow ID subfield, a response requested subfield, a next TWT request subfield, a next TWT subfield size subfield, an all TWT subfield, and/or a next TWT subfield.

The TWT flow ID subfield may indicate a TWT flow ID for which TWT information may be requested or is being provided. The TWT flow ID subfield may be reserved in response to all-TWT subfield being a defined value (e.g., 1, or any other value). The response requested subfield may indicate whether a transmitter of the first frame and/or the second frame is requesting a frame (e.g., TWT information frame or ML TWT information frame) to be transmitted in response to the first frame and/or the second frame. The next TWT request subfield may indicate that the first frame and/or the second frame is a request for delivery of the first frame and/or the second frame containing a nonzero length next TWT field. The next TWT subfield size subfield may indicate a size of the next TWT subfield. The all-TWT subfield may indicate that the TWT information frame reschedules one or more TWTs occurring after the all-TWT subfield. The next TWT subfield may indicate a least significant portion of a TSF, at the next TWT, for a TWT SP specified by the TWT flow ID subfield. The next TWT subfield may be of a variable size as determined by a value indicated in the next TWT subfield size subfield.

The link ID information may comprise a link ID and/or a link ID bitmap. The link ID bitmap may comprise bits corresponding to each setup link. A size of the link ID may be 4 bits, 16 bit, or any other quantity of bits. The link ID information type may indicate whether the link ID information is a link ID or a link ID bitmap. The link ID information type further may indicate whether same updated timing information for the TWT SP may be applied to links corresponding to bits indicated in the link ID bitmap or corresponding different updated timing information may be applied to each different link corresponding to each bit indicated in the link ID bitmap.

The updated timing information may be repeated N times in the first frame and/or the second frame, for example, based on/in response to a value of the link ID information type and/or a quantity of bits indicated in the link ID bitmap being N. Each updated timing information may be information for each link corresponding to each bit indicated in the link ID bitmap.

The updated timing information may be repeated N-1 times in the first frame and/or the second frame, for example, based on/in response to a value of the link ID information type and/or a quantity of bits indicated in the link ID bitmap being N. Each updated timing information may be information for links corresponding to a second bit bit to the last bit among bits indicated in the link ID bitmap. Updated timing information for the link corresponding to the first bit among bits indicated in the link ID bitmap may be indicated by timing information in TWT information field of the first frame and/or the second frame.

The at least one request frame and/or the at least one response frame may be sent/received via the first link. A non-AP MLD may receive, from an AP MLD, at least one response frame. The at least one response frame may indicate at least one of: a mapping of a first TID to a first link between a first STA of the non-AP MLD and a first AP of the AP MLD; a mapping of a second TID to a second link between a second STA of the non-AP MLD and a second AP of the AP MLD; and/or a configuration of a TWT SP of the second link.

The non-AP MLD may transition a power state of the second STA, corresponding to the second link for the non-AP MLD, to a doze state. The non-AP MLD may receive, via the first link and at a time during which the second link is in the doze state, a first frame indicating rescheduling of the TWT SP of the second link. The first frame may comprise at least one of link ID information of the second link and/or updated timing information for the TWT SP of the second link. The non-AP MLD may send/transmit, to the AP MLD, an acknowledgement, for example, based on/in response to receiving the first frame. A subfield (e.g., a next TWT subfield) in the first frame may indicate a start time of a first upcoming TWT SP (e.g., the next TWT SP) of the second link.

The non-AP MLD, or the second STA, may replace a start time of the first upcoming TWT SP (i.e., the next TWT SP) of the second link with a value (e.g., a time) indicated by a subfield (e.g., a next TWT subfield) of the first frame. The non-AP MLD, or the second STA, may start the first upcoming TWT SP (i.e., the next TWT SP) of the second link at a time indicated by the value contained in the subfield (e.g., the next TWT subfield) of the first frame. The non-AP MLD, or the second STA, may preserve the PM mode of the second STA from the time at which the first frame is received or the time at which the acknowledgement for the first frame is sent to the time indicated in the next TWT subfield of the first frame.

The non-AP MLD may send/transmit, to the AP MLD, at least one request frame. The at least one request frame may comprise parameters indicating at least one of: a mapping of the first TID to the first link, a mapping of the second TID to the second link, and/or a configuration of the TWT SP for the second link. The at least one response frame may indicate acceptance of the parameters.

The non-AP MLD may determine that the non-AP MLD has data (e.g., BUs) of the second TID for transmission outside the TWT SP of the second link. The non-AP MLD may send/transmit, to the AP MLD via the first link, a second frame indicating rescheduling of the TWT SP of the second link. The non-AP MLD may send the second frame at a time at which the second link is in a doze state. The second frame may comprise at least one of link ID information of the second link and/or updated timing information for the TWT SP of the second link. The non-AP MLD may receive an acknowledgement, for example, based on/in response to sending the second frame.

A subfield (e.g., a next TWT subfield) in the second frame may indicate a start time of the first upcoming TWT SP (e.g., a next TWT SP) of the second link. The non-AP MLD, or the second STA, may replace a start time of the first upcoming TWT SP (i.e., the next TWT SP) of the second link with a value (e.g., a time) indicated by a subfield (e.g., a next TWT subfield) of the second frame. The non-AP MLD, or the second STA, may start the first upcoming TWT SP (i.e., the next TWT SP) of the second link at a time indicated by the value contained in the subfield (e.g., the next TWT subfield) of the second frame. The non-AP MLD or the second STA may preserve the PM mode of the second STA from the time the TWT information frame is received or the time the acknowledgement for the TWT information frame is sent to the time indicated in the next TWT subfield of the TWT information frame.

The non-AP MLD may transition a power state of the second STA to an awake state at the beginning of a rescheduled TWT SP for the second link, for example, based on the receiving of the first frame from the AP MLD or the transmitting of the second frame to the AP MLD via a first link. The non-AP MLD may transition the power state of the second STA to a doze state at the end of the rescheduled TWT SP for the second link.

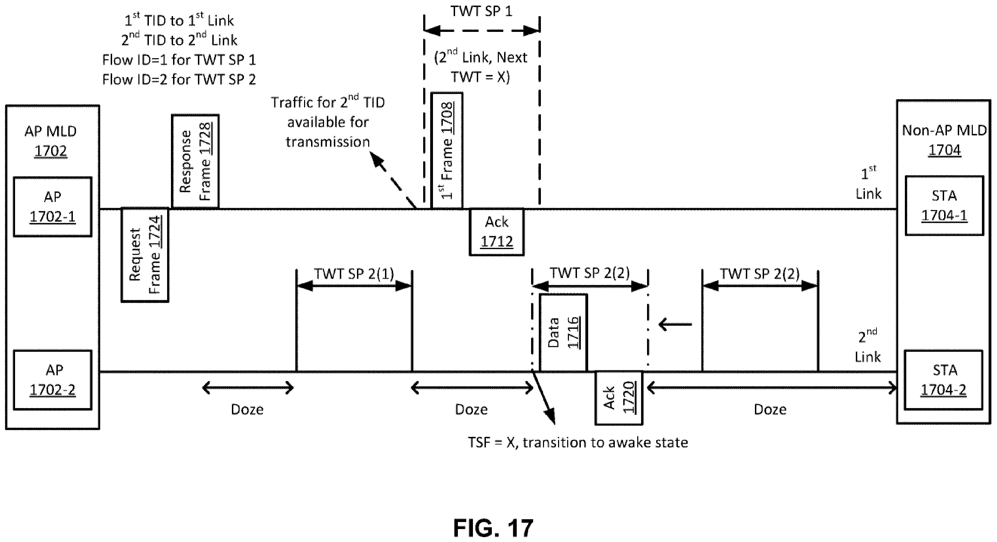

FIG. 17 shows an example ML flexible TWT operation. The example ML flexible TWT operation may be used to reschedule a TWT SP for a link, for example, based on data being available for transmission at an AP MLD. The TWT SP for the link may be rescheduled based on an indication via another link.

A non-AP MLD 1704 may send/transmit at least one request frame 1724 to an AP MLD 1702 via a first link. The AP MLD 1702 may send/transmit at least one response frame 1728 to the non-AP MLD 1704, for example, based on/in response to the at least one request frame 1724. The request frame 1724 and/or the response frame 1728 may comprise at least one of: a mapping of a first TID to a first link between a first STA (STA 1604-1) of the non-AP MLD 1604 and a first AP (AP 1602-1) of the AP MLD 1602; mapping of a second TID to a second link between a second STA (STA 1604-2) of the non-AP MLD and a second AP (AP 1602-2) of the AP MLD 1602; and/or configuration of a TWT SP 1 of the first link; and/or configuration of a TWT SP 2 of the second link.

The at least one request frame 1724 may be at least one of an association request frame, a TTLM request frame, and/or a TWT setup request frame. The at least one response frame 1728 may be at least one of an association response frame, a TTLM response frame, and/or a TWT setup response frame.

The AP MLD 1702 may determine that the AP MLD 1702 has data (e.g., BUs) of the second TID for transmission outside the TWT SP 2 of the second link. The AP MLD 1702 may send/transmit, to the non-AP MLD 1704 via the first link, a first frame 1708 indicating rescheduling of the TWT SP 2(2) of the second link. The first frame 1708 may comprise a link ID information of the second link and updated timing information for the TWT SP 2(2) of the second link. The first frame 1708 may be an action frame or an enhanced action frame. The first frame 1708 may be transmitted during the TWT SP 1 of the first link.

The non-AP MLD 1704 may send/transmit, to the AP MLD 1702 via the first link, an acknowledgement 1712, for example, based on/in response to the first frame 1708. The non-AP MLD 1704, or the second STA, may replace a start time of the TWT SP 2(2) with a value of a subfield (e.g., a time) indicated in the first frame 1708. The subfield may be a next TWT subfield.

The non-AP MLD 1704 may transition a power state of the second STA (corresponding to the second link) to an awake state at the start time of the rescheduled TWT SP 2(2), for example, based on receiving the first frame 1708. The start time may be based on the time indicated in the first frame 1708. The start time may be the time indicated in the first frame 1708.

The AP MLD 1702 may send/transmit, to the non-AP MLD 1704 via the second link, data (e.g., a data frame 1716) during the rescheduled TWT SP 2(2) of the second link. The data frame 1716 may be for the second TID. The non-AP MLD 1604 may transmit an acknowledgement 1720, via the second link, to the AP MLD, for example, based on/in response to the data frame 1716 for the second TID.

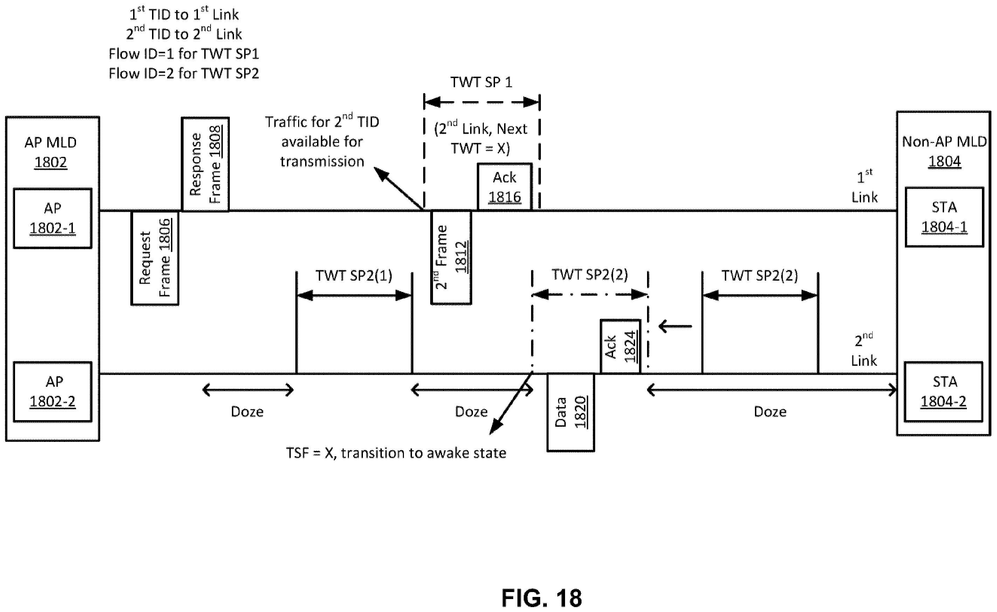

FIG. 18 shows an example of ML flexible TWT operation. The example ML flexible TWT operation may be used to reschedule a TWT SP for a link, for example, based on data being available for transmission at a non-AP MLD. The TWT SP for the link may be rescheduled based on an indication via another link.

A non-AP MLD 1804 may send/transmit at least one request frame 1806 to an AP MLD 1802 via a first link. The AP MLD 1802 may send/transmit at least one response frame 1808 to the non-AP MLD 1804, for example, based on/in response to the at least one request frame 1806. The request frame 1806 and/or the response frame 1808 may comprise at least one of: a mapping of a first TID to a first link between a first STA (STA 1804-1) of the non-AP MLD 1804 and a first AP (AP 1802-1) of the AP MLD 1802; mapping of a second TID to a second link between a second STA (STA 1804-2) of the non-AP MLD 1804 and a second AP ()AP 1802-2) of the AP MLD 1802; configuration of a TWT SP 1 of the first link; and/or configuration of a TWT SP 2 of the second link.

The at least one request frame 1806 may be at least one of an association request frame, a TID-to-link mapping request frame, and/or a TWT setup request frame. The at least one response frame 1808 may be at least one of an association response frame, a TID-to-link mapping response frame, and/or a TWT setup response frame.

The non-AP MLD 1804 may determine that the non-AP MLD 1804 has data (e.g., BUs) of the second TID for transmission outside the TWT SP 2 of the second link. The non-AP MLD 1804 may send/transmit, to the AP MLD 1802 via the first link, a second frame 1812. The second frame 1812 may indicate rescheduling of a TWT SP 2(2) of the second link. The second frame 1812 may comprise link ID information of the second link and/or updated timing information for the TWT SP 2(2) of the second link. The second frame 1812 may be an action frame and/or an enhanced action frame. The second frame may be transmitted within/during the TWT SP 1 of the first link.

The AP MLD 1802 may send/transmit, to the non-AP MLD 1804 via the first link, an acknowledgement 1816, for example, based on/in response to the second frame 1812. The non-AP MLD 1804, or the second STA, may replace a start time of the TWT SP 2(2) with a value of a subfield (e.g., a time) indicated in the second frame 1812. The subfield may be a next TWT subfield.

The non-AP MLD 1804 may transition a power state of the second STA (e.g., corresponding to the second link for the non-AP MLD 1804) to an awake state, for example, based on transmitting the second frame 1812. The non-AP MLD 1804 may transition a power state of the second STA to an awake state at the start time of the rescheduled TWT SP 2(2). The start time may be based on the time indicated in the second frame 1812. The start time may be the time indicated in the second frame 1812.

The non-AP MLD 1802 may send/transmit, to the AP MLD 1802 via the second link, data 1820 (e.g., a data frame) for the second TID during the rescheduled TWT SP 2(2) of the second link. The AP MLD 1802 may transmit an acknowledgement 1824, via the second link to the non-AP MLD 1804, for example, based on/in response to receiving the data 1820 for the second TID.

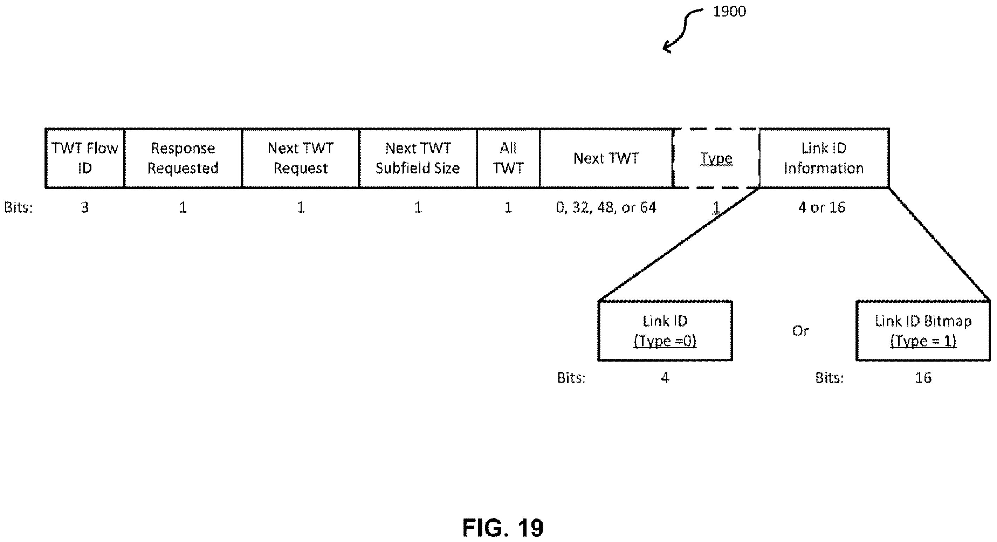

FIG. 19 shows an example ML TWT information field. The ML TWT information field 1900 may be for supporting ML flexible TWT operation. The ML TWT information field 1900 may be comprised in a TWT information frame or a ML TWT information frame. The ML TWT information field 1900 may be comprised in a first frame and/or a second frame (e.g., as described herein with respect to FIGS. 17 and 18). The ML TWT information field 1900 may comprise at least one of: a TWT flow ID subfield, a response requested subfield, a next TWT request subfield, a next TWT subfield size subfield, all-TWT subfield, a next TWT subfield, a type subfield, and/or a link ID information subfield.

The TWT flow ID subfield may indicate a TWT flow ID for which TWT information may be requested or provided. The TWT flow ID subfield may be reserved based on all-TWT subfield being equal to a specific value (e.g., 1, or any other value). The response requested subfield may indicate whether a transmitter of the first frame and/or the second frame may be requesting a frame (e.g., a TWT information frame or ML TWT information frame) to be transmitted based on/in response to the first frame or the second frame. The next TWT request subfield may indicate that the first frame or the second frame may be a request for delivery of the first frame or the second frame containing a nonzero length next TWT field. The next TWT subfield size subfield may indicate a size of the next TWT subfield. The all-TWT subfield may indicate that the TWT information frame reschedules one or more TWTs occurring after the all-TWT subfield. The next TWT subfield may indicate a least significant portion of a TSF, at the next TWT, for the TWT SP specified by the TWT flow ID subfield. The next TWT subfield may be of a variable size as determined by a value of the next TWT subfield size subfield.

The type subfield may indicate a type of a link ID information. The type subfield may be set to a first value (e.g., 0, or any other first value), for example, if the link ID information subfield comprises a link ID. The type subfield may be set to a second value (e.g., 1, or any other second value), for example, if the link ID information subfield comprises a link ID bitmap. The type subfield may not be present if link ID information is preconfigured to be one of link ID or link ID bitmap.

The link ID information subfield may indicate link(s) on which a TWT SP may be re-scheduled. The link ID information subfield may comprise a link ID or a link ID bitmap. The size of the link ID may be 4 bits (or any other quantity of bits) and the size of the link ID bitmap may be 16 bits (or any other quantity of bits). The link ID information subfield may comprise the link ID, for example, if the type subfield is set to a first value (e.g., 0, or any other first value). The link ID information subfield may comprise the link ID bitmap, for example, if the type subfield is set to a second value (e.g., 1, or any other second value). Each bit in the link ID bitmap may correspond to each link among all setup links. For example, link(s) corresponding to bits set to a predefined value (e.g., 1, or any other predefined value), in the link ID bitmap, may be link(s) on which the TWT SP may be re-scheduled.

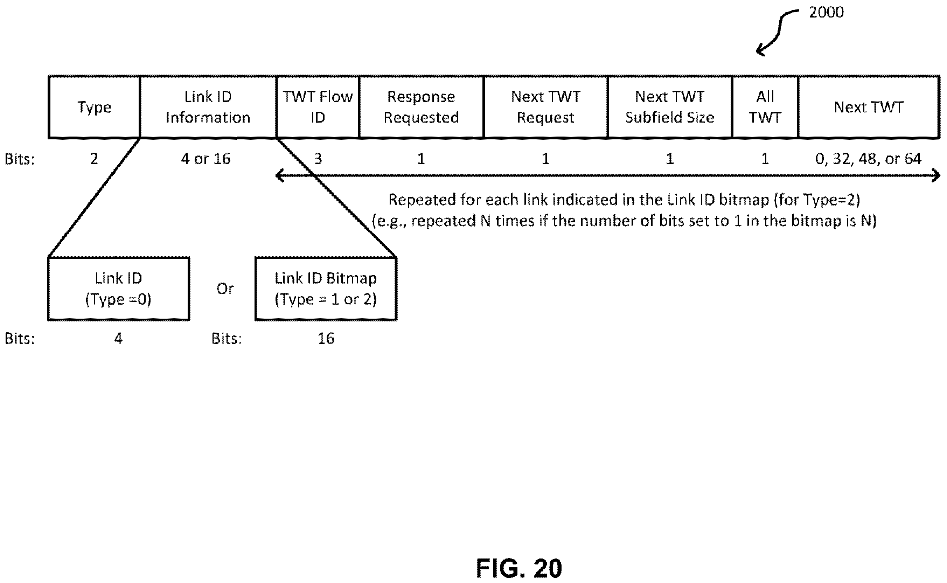

FIG. 20 shows an example ML TWT information field. The example ML TWT information field 2000 shows in FIG. 20 may be for supporting ML flexible TWT operation. The ML TWT information field 1900 may be comprised in a TWT information frame or a ML TWT information frame. The ML TWT information field 1900 may be comprised in a first frame and/or a second frame (e.g., as described herein with respect to FIGS. 17 and 18). The ML TWT information field 2000 may comprise at least one of: a type subfield, a link ID information subfield, a TWT flow ID subfield, a response requested subfield, a next TWT request subfield, a next TWT subfield size subfield, an all-TWT subfield, and/or a next TWT subfield.

The type subfield may indicate a type of a link ID information. The type subfield may be set to a first value (e.g.,0, or any other first value), for example, if the link ID information subfield comprises a link ID. The type subfield may be set to a second value (e.g., 1, or any other second value), for example, if the link ID information subfield comprises a link ID bitmap. A same updated timing information may be applied to links corresponding to bits indicated in the link ID bitmap, for example, if the type subfield is set to the second value. The type subfield may be set to a third value (e.g., 2, or any other third value), for example, if the link ID information subfield comprises a link ID bitmap. Different updated timing information may be applied to each different link corresponding to each bit indicated in the link ID bitmap, for example, if the type subfield is set to the second value. The updated timing information may be repeated N times in the ML TWT information field, for example, if the type subfield is set to 2 and the quantity of bits indicated in the link ID bitmap is N.

The link ID information subfield may indicate link(s) on which a TWT SP may be re-scheduled. The link ID information subfield may comprise a link ID or a link ID bitmap. A size of the link ID may be 4 bits (or any other quantity of bits) and a size of the link ID bitmap may be 16 bits (or any other quantity of bits). The link ID information subfield may comprise a link ID, for example, if the type subfield is set to the first value (e.g., 0). The link ID information may be the link ID bitmap, for example, if the type subfield is set to the second or the third value (e.g., 1 or 2). Each bit in the link ID bitmap may correspond to a link among all setup links. Link(s) corresponding to bits set to 1 (or any other predefined value), in the link ID bitmap may be link(s), on which the TWT SP may be re-scheduled.

The TWT flow ID subfield may indicate a TWT flow ID for which TWT information may be requested or provided. The TWT flow ID subfield may be reserved in response to all-TWT subfield being set to a predefined value (e.g., 1). The response requested subfield may indicate whether a transmitter of the first frame and/or the second frame may be requesting a frame (e.g., a TWT information frame or an ML TWT information frame) to be transmitted in response to the first frame or the second frame. The next TWT request subfield may indicate that the first frame or the second frame may be a request for delivery of the first frame or the second frame containing a nonzero length next TWT field. The next TWT subfield size subfield may indicate a size of the next TWT subfield. The all-TWT subfield may indicate that the TWT information frame reschedules one or more TWTs occurring after the all-TWT subfield. The next TWT subfield indicates a least significant portion of a TSF, at a next TWT, for the TWT SP specified by the TWT flow ID subfield. The next TWT subfield may be of a variable size as determined by a value of the next TWT subfield size subfield.

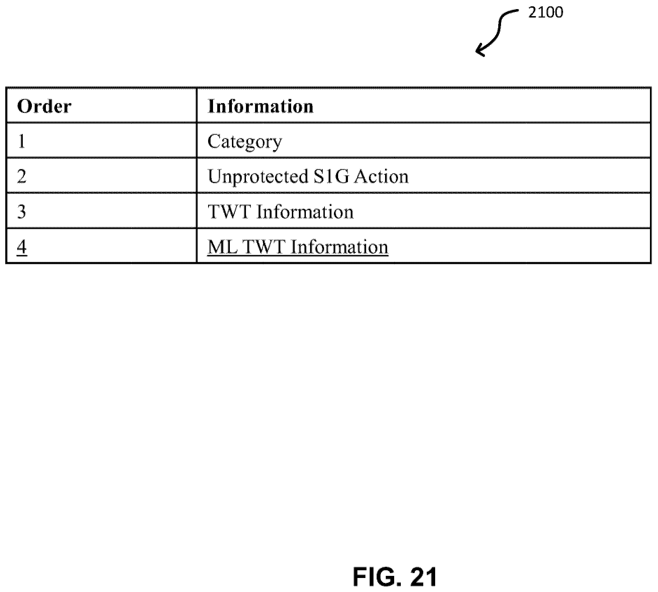

FIG. 21 shows an example TWT information frame. The TWT information frame 2100 may comprise an ML flexible TWT information field. The TWT information frame 2100 may comprise an ML TWT information field. The TWT information frame 2100 may further comprise a category field, an unprotected S1G action field, and a TWT information field.

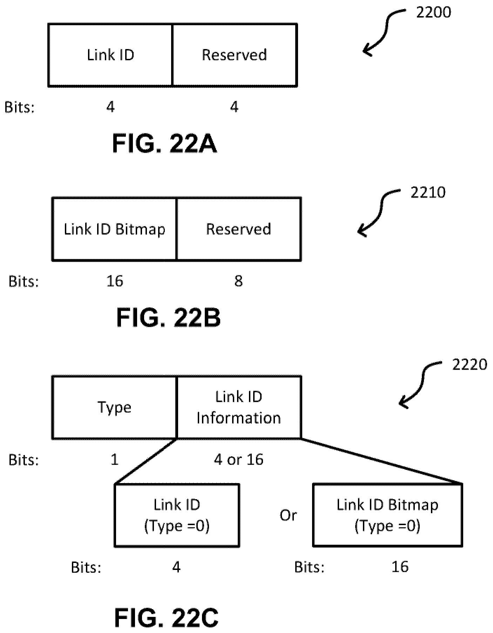

FIG. 22A shows an example ML TWT information field. A TWT information frame may comprise the ML TWT information field 2200 shows in FIG. 22A. The ML TWT information field 200 may comprise a link ID subfield. The size of the link ID subfield may be 4 bits (or any other quantity of bits).

FIG. 22B shows an example ML TWT information field. A TWT information frame may comprise the ML TWT information field 2210 shows in FIG. 22B. The ML TWT information field 2210 may comprise a link ID bitmap subfield. A size of the link ID bitmap subfield may be 16 bits, or any other quantity of bits.

FIG. 22C shows an example ML TWT information field. A TWT information frame may comprise the ML TWT information field 2220 shows in FIG. 22C. The ML TWT information field 2200 may comprise at least one of a type subfield and/or a link ID information subfield.

The type subfield may indicate a type of a link ID information (subfield. The type subfield may be set to a first value (e.g., 0, or any other first value), for example, if the link ID information subfield comprises a link ID. The type subfield may be set to a second value (e.g., 1, or any other second value), for example, if the link ID information subfield is a link ID bitmap.

The link ID information subfield may indicate link(s) on which a TWT SP may be re-scheduled. The link ID information subfield may comprise a link ID or a link ID bitmap. The size of the link ID may be 4 bits (or any other quantity of bits) and the size of the link ID bitmap may be 16 bits (or any other quantity of bits). The link ID information subfield may comprise the link ID, for example, if the type subfield is set to a first value (e.g., 0, or any other first value). The link ID information subfield may comprise the link ID bitmap, for example, if the type subfield is set to a second value (e.g., 1, or any other second value). Each bit in the link ID bitmap may correspond to each link among all setup links. For example, link(s) corresponding to bits set to a predefined value (e.g., 1, or any other predefined value), in the link ID bitmap, may be link(s) on which the TWT SP may be re-scheduled

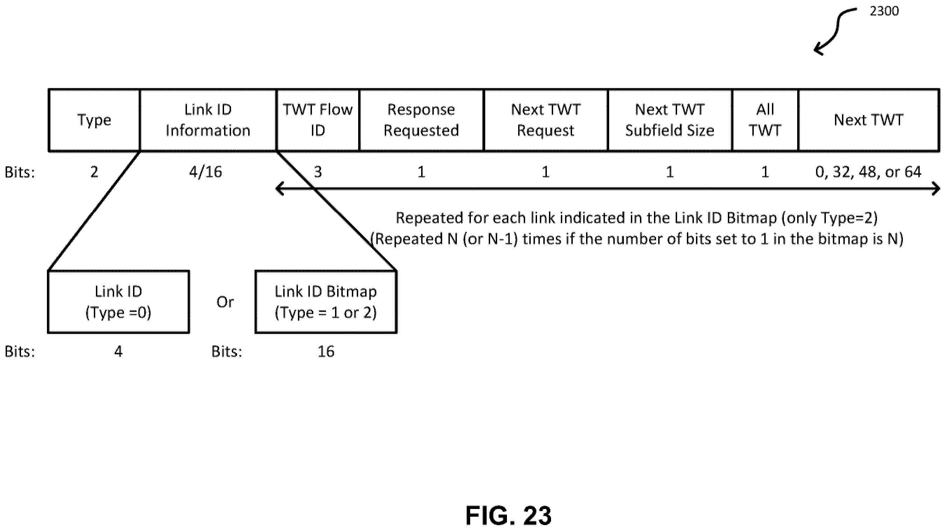

FIG. 23 shows an example ML TWT information field. A TWT information frame may comprise the ML TWT information field 2300 shown in FIG. 23. The ML TWT information field 2000 may comprise at least one of: a type subfield, a link ID information subfield, a TWT flow ID subfield, a response requested subfield, a next TWT request subfield, a next TWT subfield size subfield, an all-TWT subfield, and/or a next TWT subfield.

The type subfield may indicate a type of a link ID information. The type subfield may be set to a first value (e.g.,0, or any other first value), for example, if the link ID information subfield comprises a link ID. The type subfield may be set to a second value (e.g., 1, or any other second value), for example, if the link ID information subfield comprises a link ID bitmap. A same updated timing information may be applied to links corresponding to bits indicated in the link ID bitmap, for example, if the type subfield is set to the second value. The type subfield may be set to a third value (e.g., 2, or any other third value), for example, if the link ID information subfield comprises a link ID bitmap. Different update timing information may be applied to each different link corresponding to each bit indicated in the link ID bitmap, for example, if the type subfield is set to the second value.

The link ID information subfield may indicate link(s) on which a TWT SP may be re-scheduled. The link ID information subfield may comprise a link ID or a link ID bitmap. A size of the link ID may be 4 bits (or any other quantity of bits) and a size of the link ID bitmap may be 16 bits (or any other quantity of bits). The link ID information subfield may comprise a link ID, for example, if the type subfield is set to the first value (e.g., 0). The link ID information may be the link ID bitmap, for example, if the type subfield is set to the second or the third value (e.g., 1 or 2). Each bit in the link ID bitmap may correspond to a link among all setup links. Link(s) corresponding to bits set to 1 (or any other predefined value), in the link ID bitmap may be link(s), on which the TWT SP may be re-scheduled.

The TWT flow ID subfield may indicate a TWT flow ID for which TWT information may be requested or provided. The TWT flow ID subfield may be reserved in response to all-TWT subfield being set to a predefined value (e.g., 1). The response requested subfield may indicate whether a transmitter of the first frame and/or the second frame may be requesting a frame (e.g., a TWT information frame or an ML TWT information frame) to be transmitted in response to the first frame or the second frame. The next TWT request subfield may indicate that the first frame or the second frame may be a request for delivery of the first frame or the second frame containing a nonzero length next TWT field. The next TWT subfield size subfield may indicate a size of the next TWT subfield. The all-TWT subfield may indicate that the TWT information frame reschedules one or more TWTs occurring after the all-TWT subfield. The next TWT subfield indicates a least significant portion of a TSF, at a next TWT, for the TWT SP specified by the TWT flow ID subfield. The next TWT subfield may be of a variable size as determined by a value of the next TWT subfield size subfield.

The updated timing information may be repeated N (or N-1) times in the ML TWT information field. Each updated timing information may be information for each link corresponding to a 2nd bit to a last bit, among bits indicated in the link ID bitmap, for example, if the updated timing information is being repeated N-1 times. Updated timing information for the link corresponding to the first bit, among bits indicated in the link ID bitmap, may be indicated by subfields in a TWT information field of the TWT information frame.

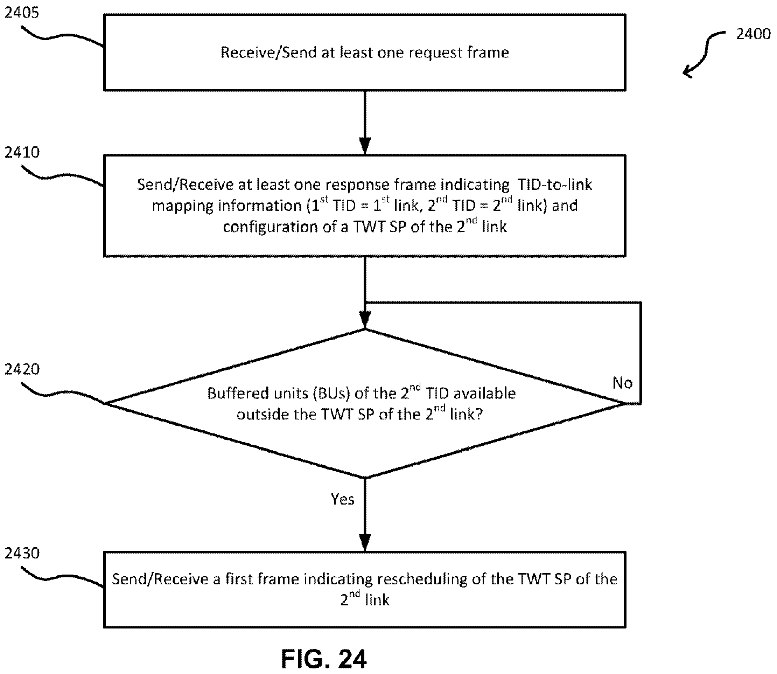

FIG. 24 shows an example method for rescheduling a next TWT SP. The example method 2400 of FIG. 24 may be performed by an AP MLD and/or a non-AP MLD.

At step 2405, a communication device (e.g., AP MLD or a non-AP MLD) may receive (send) at least one request frame. At step 2410, the communication device may send (receive) at least one response frame. The at least one response frame may indicate at least one of: a mapping of a first TID to a first link between a first STA of a non-AP MLD and a first AP of the AP MLD; a mapping of a second TID to a second link between a second STA of the non-AP MLD and a second AP of the AP MLD; and/or a configuration of a TWT SP of the second link .

At step 2420, the communication device may determine that the communication device has data (e.g., BUs) of the second TID for transmission outside the TWT SP of the second link. Alternatively, a second communication device (an AP MLD or a non-AP MLD different from the communication device) may determine that the second communication device has data (e.g., BUs) of the second TID for transmission outside the TWT SP of the second link.

At step 2430, the communication device may send (e.g., to another communication device), via the first link, a first frame indicating rescheduling of the TWT SP of the second link. Alternatively, the communication device may receive (e.g., from the second communication device), via the first link, a first frame indicating rescheduling of the TWT SP of the second link.

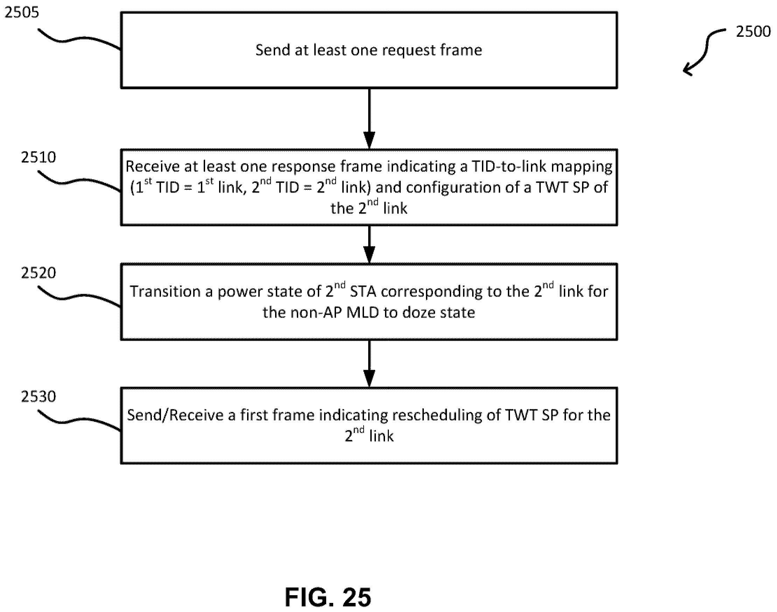

FIG. 25 shows an example method for rescheduling a TWT SP. The example method 2500 of FIG. 25 may be performed by a non-AP MLD.

At step 2505, a non-AP MLD may send at least one request frame (e.g., to an AP MLD). At step 2510, a non-AP MLD may receive (e.g., from a non-AP MLD) at least one response frame indicating at least one of: a mapping of a first TID to a first link (e.g., between a first STA of the non-AP MLD and a first AP of an AP MLD); a mapping of a second TID to a second link (e.g., between a second STA of the non-AP MLD and a second AP of the AP MLD); and/or a configuration of a TWT service period SP of the second link.

At step 2520, the non-AP MLD may transition a power state of the second STA (corresponding to the second link for the non-AP MLD) to a doze state. At step 2530, the non-AP MLD may send/receive, to/from the AP MLD via the first link, a first frame indicating rescheduling of the TWT SP of the second link. The non-AP MLD may send/receiv the first frame at a time at which the second STA is in the doze state.

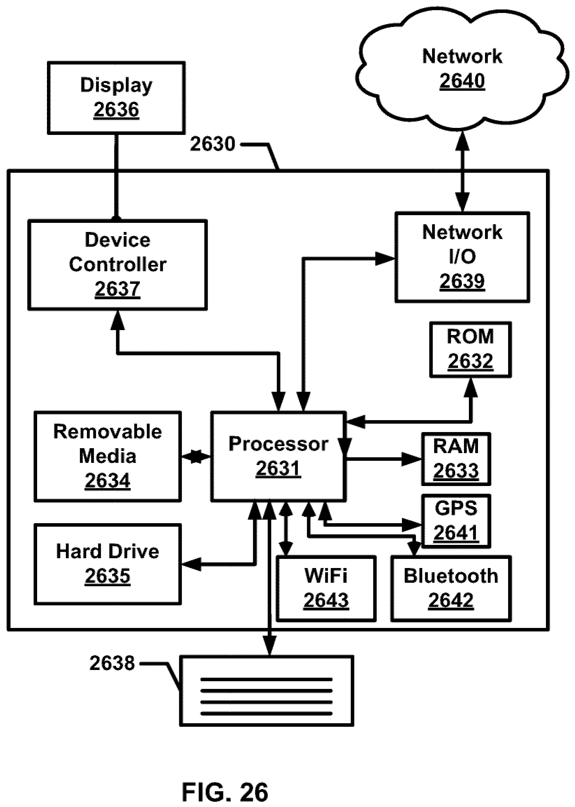

FIG. 26 shows example elements of a computing device that may be used to implement any of the various devices described herein, including, for example, a STA (e.g., 110, 120, 160, 170, 312, 313, 711, 712, 811, 812, 911, 1011, 1012, 1404, 1454), an AP (e.g., 110, 120, 311, 710, 810, 910, 1010, 1402, 1452), a non-AP/STA MLD (e.g., 420, 1104, 1504, 1604, 1704, 1804), an AP MLD (e.g., 410, 1102, 1502, 1602, 1702, 1802, 1902), communication devices (e.g., 210, 260), and/or any computing and/or communication device described herein. The computing device 2630 may include one or more processors 2631, which may execute instructions stored in the random-access memory (RAM) 2633, the removable media 2634 (such as a Universal Serial Bus (USB) drive, compact disk (CD) or digital versatile disk (DVD), or floppy disk drive), or any other desired storage medium. Instructions may also be stored in an attached (or internal) hard drive 2635. The computing device 2630 may also include a security processor (not shown), which may execute instructions of one or more computer programs to monitor the processes executing on the processor 2631 and any process that requests access to any hardware and/or software components of the computing device 2630 (e.g., ROM 2632, RAM 2633, the removable media 2634, the hard drive 2635, the device controller 2637, a network interface 2639, a GPS 2641, a Bluetooth interface 2642, a WiFi interface 2643, etc.). The computing device 2630 may include one or more output devices, such as the display 2636 (e.g., a screen, a display device, a monitor, a television, etc.), and may include one or more output device controllers 2637, such as a video processor. There may also be one or more user input devices 2638, such as a remote control, keyboard, mouse, touch screen, microphone, etc. The computing device 2630 may also include one or more network interfaces, such as a network interface 2639, which may be a wired interface, a wireless interface, or a combination of the two. The network interface 2639 may provide an interface for the computing device 2630 to communicate with a network 2640 (e.g., a RAN, or any other network). The network interface 2639 may include a modem (e.g., a cable modem), and the external network 2640 may include communication links, an external network, an in-home network, a provider's wireless, coaxial, fiber, or hybrid fiber/coaxial distribution system (e.g., a DOCSIS network), or any other desired network. Additionally, the computing device 2630 may include a location-detecting device, such as a global positioning system (GPS) microprocessor 2641, which may be configured to receive and process global positioning signals and determine, with possible assistance from an external server and antenna, a geographic position of the computing device 2630.

The example in FIG. 26 may be a hardware configuration, although the components shown may be implemented as software as well. Modifications may be made to add, remove, combine, divide, etc. components of the computing device 2630 as desired. Additionally, the components may be implemented using basic computing devices and components, and the same components (e.g., processor 2631, ROM storage 2632, display 2636, etc.) may be used to implement any of the other computing devices and components described herein. For example, the various components described herein may be implemented using computing devices having components such as a processor executing computer-executable instructions stored on a computer-readable medium, as shown in FIG. 26. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising transmitting, by an access point (AP) multi-link device (MLD) to a non-AP MLD, a first frame indicating configuration of a target wake time (TWT) service period (SP) of a first link of a plurality of links between the AP MLD and non-AP MLD.

Clause 2. The method of clause 1, further comprising transmitting, via a second link of the plurality of links, a second frame indicating rescheduling of the TWT SP of the first link, wherein the second frame comprises: link identifier (ID) information of the first link; and updated timing information for the TWT SP of the first link.

Clause 3. The method of any one of clauses 1 and 2, further comprising receiving, via the second link, a third frame indicating rescheduling of the TWT SP of the first link, wherein the third frame comprises: the link ID information of the first link; and second timing information for the TWT SP of the first link.

Clause 4. The method of any one of clauses 1-3, further comprising transmitting, by the AP MLD via the second link, an acknowledgement based on receiving the third frame.

Clause 5. The method of any one of clauses 1-4, wherein the first frame further indicates: a first mapping of a first traffic identifier (TID) to the first link; and a second mapping of a second TID to the second link.

Clause 6. The method of any one of clauses 1-5, wherein the transmitting the second frame is based on determining that bufferable units associated with a first traffic identifier (TID), mapped to the first link, are available for transmission outside the TWT SP of the first link.

Clause 7. The method of any one of clauses 1-6, further comprising receiving at least one frame indicating: a third mapping of a first traffic identifier (TID) to the first link; a fourth mapping of a second TID to the second link; and a second configuration of the TWT SP of the first link, wherein the first frame indicates acceptance of one or more parameters indicated by the at least one frame.

Clause 8. The method of any one of clauses 1-7, wherein: the link ID information comprises an indication of the first link; and the updated timing information comprises a start time of the TWT SP of the first link.

Clause 9. The method of any one of clauses 1-8, wherein the TWT SP is a next scheduled TWT SP among TWT SPs of the first link.

Clause 10. The method of any one of clauses 1-9, wherein the TWT SP comprises one of an individual TWT, a broadcast TWT SP, or a restricted TWT SP.

Clause 11. The method of any one of clauses 1-10, wherein the second frame is transmitted during a TWT SP configured for the second link.

Clause 12. The method of any one of clauses 1-11, wherein the second frame is an action frame including a TWT information frame, an unprotected sub-1 GHz (S1G) action frame, or an extremely high throughput (EHT) action frame.

Clause 13. The method of any one of clauses 1-12, wherein the rescheduling of the TWT SP of the first link comprises replacing a start time of the TWT SP of the first link with a time indicated in the second frame.

Clause 14. The method of any one of clauses 1-13, wherein the link ID information is a link ID or a link ID bitmap.

Clause 15. A computing device comprising one or more processors and memory storing instructions that, when executed by the one or more processors, cause the computing device to perform the method of any one of clauses 1-14.

Clause 16. A system comprising: an access point (AP) multi-link device (MLD) configured to perform the method of any one of clauses 1-14, and a non-AP MLD configured to receive the first frame and the second frame.

Clause 17. A computer-readable medium storing instructions that, when executed, cause performance of the method any one of clauses 1-14.

Clause 18. A method comprising transmitting, by an access point (AP) multi-link device (MLD) to a non-AP MLD, a first frame indicating configuration of a target wake time (TWT) service period (SP) of a first link of a plurality of links between the AP MLD and non-AP MLD.

Clause 19. The method of clause 18, further comprising receiving, via a second link of the plurality of links, a second frame indicating rescheduling of the TWT SP of the first link, wherein the second frame comprises: link identifier (ID) information of the first link; and updated timing information for the TWT SP of the first link.

Clause 20. The method of any one of clauses 18 and 19, further comprising transmitting, via the second link, a third frame indicating rescheduling of the TWT SP of the first link, wherein the third frame comprises: link identifier (ID) information of the first link; and updated timing information for the TWT SP of the first link.

Clause 21. The method of any one of clauses 18-20, further comprising receiving, by the AP MLD via the second link, an acknowledgement based on receiving the third frame.

Clause 22. The method of any one of clauses 18-21, wherein the first frame further indicates: a first mapping of a first traffic identifier (TID) to the first link; and a second mapping of a second TID to the second link.

Clause 23. The method of any one of clauses 18-22, wherein the transmitting the second frame is based on determining that bufferable units associated with a first traffic identifier (TID), mapped to the first link, are available for transmission outside the TWT SP of the first link.

Clause 24. The method of any one of clauses 18-23, further comprising receiving at least one frame indicating: a third mapping of a first traffic identifier (TID) to the first link; a fourth mapping of a second TID to the second link; and a second configuration of the TWT SP of the first link, wherein the first frame indicates acceptance of one or more parameters indicated by the at least one frame.

Clause 25. The method of any one of clauses 18-24, wherein: the link ID information comprises an indication of the first link; and the updated timing information comprises a start time of the TWT SP of the first link.

Clause 26. The method of any one of clauses 18-25, wherein the TWT SP is a next scheduled TWT SP among TWT SPs of the first link.

Clause 27. The method of any one of clauses 18-26, further comprising transmitting via the second link, an acknowledgement in response to the second frame.

Clause 28. A computing device comprising one or more processors and memory storing instructions that, when executed by the one or more processors, cause the computing device to perform the method of any one of clauses 18-27.

Clause 29. A system comprising: an access point (AP) multi-link device (MLD) configured to perform the method of any one of clauses 18-27, and a non-AP MLD configured to transmit the second frame.

Clause 30. A computer-readable medium storing instructions that, when executed, cause performance of the method any one of clauses 18-27.

Clause 31. A method of comprising receiving, by a non-access point (non-AP) multi-link device (MLD) from an access point (AP) MLD, a first frame indicating configuration of a target wake time (TWT) service period (SP) of a first link of a plurality of links between the AP MLD and the non-AP MLD.

Clause 32. The method of clause 31, further comprising transitioning a first station affiliated with the non-AP MLD to a doze state.

Clause 33. The method of any one of clauses 31 and 32, further comprising receiving, via a second link of the plurality of links while the first station is in the doze state, a second frame indicating rescheduling of the TWT SP of the first link, wherein the second frame comprises: link identifier (ID) information of the first link; and timing information for the TWT SP of the first link.

Clause 34. The method of any one of clauses 31-33, wherein the first station is associated with the first link.

Clause 35. The method of any one of clauses 31-34, further comprising transmitting, via the second link while the first station is in the doze state, a third frame indicating rescheduling of the TWT SP of the first link, wherein the third frame comprises: the link ID information of the first link; and second timing information for the TWT SP of the first link.

Clause 36. The method of any one of clauses 31-35, further comprising transmitting, by the AP MLD via the second link, an acknowledgement based on receiving the third frame.

Clause 37. The method of any one of clauses 31-36, wherein: the link ID information comprises an indication of the first link; and the timing information comprises a start time of the TWT SP of the first link.

Clause 38. The method of any one of clauses 31-37, wherein the TWT SP is a next scheduled TWT SP among TWT SPs of the first link.

Clause 39. A computing device comprising one or more processors and memory storing instructions that, when executed by the one or more processors, cause the computing device to perform the method of any one of clauses 31-38.

Clause 40. A system comprising: a non-access point (AP) multi-link device (MLD) configured to perform the method of any one of clauses 31-38, and an AP MLD configured to transmit the first frame and the second frame.

Clause 41. A computer-readable medium storing instructions that, when executed, cause performance of the method any one of clauses 31-38.

Clause 42. A method comprising transmitting, by an access point (AP) multi-link device (MLD) to a non-AP MLD, a first frame indicating: a first mapping of a first traffic identifier (TID) to a first link between a first station (STA) of the non-AP MLD and a first AP of the AP MLD; a second mapping of a second TID to a second link between a second STA of the non-AP MLD and a second AP of the AP MLD; and a first configuration of a target wake time (TWT) service period (SP) of the second link.

Clause 43. The method of clause 42, further comprising transmitting, by the AP MLD via the first link, a second frame indicating rescheduling of the TWT SP of the second link, wherein the second frame comprises: a link identifier (ID) information of the second link; and first updated timing information for the TWT SP of the second link.

Clause 44. The method of any one of clauses 42 and 43, further comprising determining that bufferable units (BUs) of the second TID are ready for transmission outside the TWT SP of the second link, wherein the transmitting of the second frame is based on the determining.

Clause 45. The method of any one of clauses 42-44, further comprising receiving, by the AP MLD from the non-AP MLD, at least one request frame comprising parameters indicating: a third mapping of the first TID to the first link; a fourth mapping of the second TID to the second link; a second configuration of the TWT SP of the second link, wherein the first frame indicates acceptance of the parameters comprised by the at least one request frame.

Clause 46. The method of any one of clauses 42-45, wherein the at least one request frame is received and the at least one first frame is transmitted via the first link

Clause 47. The method of any one of clauses 42-46, wherein the second frame further comprises a link ID information type.

Clause 48. The method of any one of clauses 42-47, wherein the link ID information type indicates whether the link ID information comprises a link ID or a link ID bitmap.

Clause 49. The method of any one of clauses 42-48, wherein the link ID information type indicates a link ID bitmap and further indicates whether a same update timing information for the TWT SP is applied to links indicated in the link ID bitmap or whether a respective updated timing information is applied to each link indicated in the link ID bitmap.

Clause 50. The method of any one of clauses 42-49, wherein, according to a value of the link ID information type, the first updated timing information is repeated N times in the second frame based on a quantity of bits, indicated in the link ID bitmap, being equal to N.

Clause 51. The method of any one of clauses 42-50, wherein, according to a value of the link ID information type, the first updated timing information is repeated N-1 times in the second frame based on a quantity of bits indicated in a link ID bitmap being equal to N.

Clause 52. The method of any one of clauses 42-51, further comprising receiving, by the AP MLD from the non-AP MLD, an acknowledgement in response to transmitting the second frame.

Clause 53. The method of any one of clauses 42-52, wherein the TWT SP of the second link is an individual TWT SP, a broadcast TWT SP, or a restricted TWT SP.

Clause 54. The method of any one of clauses 42-53, wherein the TWT SP of the second link is a first upcoming TWT SP among TWT SPs of the second link.

Clause 55. The method of any one of clauses 42-54, wherein the second frame is transmitted during a TWT SP configured for the first link.

Clause 56. The method of any one of clauses 42-55, wherein the second frame is an action frame including a TWT information frame, an unprotected S1G action frame, or an EHT action frame.

Clause 57. The method of any one of clauses 42-56, wherein the rescheduling of the TWT SP of the second link includes replacing a start time of the TWT SP of the second link with a time indicated in the second frame.

Clause 58. The method of any one of clauses 42-57, wherein the second frame further comprises a TWT Information field.

Clause 59. The method of any one of clauses 42-58, wherein the link ID information comprises a link ID.

Clause 60. The method of any one of clauses 42-59, wherein a size of the link ID is 4 bits.

Clause 61. The method of any one of clauses 42-60, wherein the link ID information comprises a link ID bitmap.

Clause 62. The method of any one of clauses 42-61, wherein the link ID bitmap comprises bits corresponding to each setup link.

Clause 63. The method of any one of clauses 42-62, wherein a size of the link ID bitmap is 16 bits.

Clause 64. The method of any one of clauses 42-63, further comprising receiving, by the AP MLD via the first link, a third frame indicating rescheduling of the TWT SP for the second link, wherein the third frame comprises: the link ID information of the second link; and second timing information for the TWT SP of the second link.

Clause 65. The method of any one of clauses 42-64, further comprising transmitting, by the AP MLD via the first link, an acknowledgement in response to the third frame.

Clause 66. The method of any one of clauses 42-65, wherein the third frame further comprises a link ID information type.

Clause 67. The method of any one of clauses 42-66, wherein the third frame is transmitted during a TWT SP configured for the first link.

Clause 68. The method of any one of clauses 42-67, wherein the rescheduling of the TWT SP of the second link includes replacing a start time of the TWT SP of the second link with a time indicated in the third frame.

Clause 69. The method of any one of clauses 42-68, wherein the third frame further comprises a TWT information field.

Clause 70. A computing device comprising one or more processors and memory storing instructions that, when executed by the one or more processors, cause the computing device to perform the method of any one of clauses 42-69.

Clause 71. A system comprising: an access point (AP) multi-link device (MLD) configured to perform the method of any one of clauses 42-69, and a non-AP MLD configured to receive the first frame and the second frame.

Clause 72. A computer-readable medium storing instructions that, when executed, cause performance of the method any one of clauses 42-69.

Clause 73. A method comprising transmitting, by an access point (AP) multi-link device (MLD) to a non-AP MLD, a first frame indicating; a mapping of a first traffic identifier (TID) to a first link between a first station (STA) of the non-AP MLD and a first AP of the AP MLD; a mapping of a second TID to a second link between a second STA of the non-AP MLD and a second AP of the AP MLD; and configuration of a target wake time (TWT) service period (SP) of the second link.

Clause 74. The method of clause 73, further comprising receiving, by the AP MLD via the first link, a second frame indicating rescheduling of the TWT SP for the second link, wherein the second frame comprises: link ID information of the second link; and updated timing information for the TWT SP of the second link.

Clause 75. The method of any one of clauses 73 and 74, further comprising transmitting, by the AP MLD via the first link, an acknowledgement in response to the first frame.

Clause 76. A computing device comprising one or more processors and memory storing instructions that, when executed by the one or more processors, cause the computing device to perform the method of any one of clauses 73-75.

Clause 77. A system comprising: an access point (AP) multi-link device (MLD) configured to perform the method of any one of clauses 73-75, and a non-AP MLD configured to receive the first frame.

Clause 78. A computer-readable medium storing instructions that, when executed, cause performance of the method any one of clauses 73-75.

Clause 79. A method comprising receiving, by a non-access point (non-AP) multi-link device (MLD) from an AP MLD, a first frame indicating: a first mapping of a first traffic identifier (TID) to a first link between a first station (STA) of the non-AP MLD and a first AP of the AP MLD; a first mapping of a second TID to a second link between a second STA of the non-AP MLD and a second AP of the AP MLD; and first configuration of a target wake time (TWT) service period (SP) of the second link.

Clause 80. The method of clause 79, further comprising transitioning, by the non-AP MLD, the second STA to a doze state.

Clause 81. The method of any one of clauses 79 and 80, further comprising receiving, by the non-AP MLD via the first link, while the second STA is in the doze state, a second frame indicating rescheduling of the TWT SP of the second link, wherein the second frame comprises: a link identifier (ID) information of the second link; and first timing information for the TWT SP of the second link.

Clause 82. The method of any one of clauses 79-81, further comprising transmitting, by the non-AP MLD to the AP MLD, an acknowledgement in response to the second frame.

Clause 83. The method of any one of clauses 79-82, further comprising transmitting, by the non-AP MLD to the AP MLD, a request frame comprising parameters indicating: a second mapping of the first TID to the first link; a third mapping of the second TID to the second link; and second configuration of the TWT SP for the second link, wherein the first response indicates acceptance of the parameters comprised in the request frame.

Clause 84. The method of any one of clauses 79-83, further comprising determining that the non-AP MLD has bufferable units (BUs) of the second TID for transmission outside the TWT SP of the second link.

Clause 85. The method of any one of clauses 79-85, further comprising transmitting, by the non-AP MLD to the AP MLD via the first link, while the second link is in the doze state, a third frame indicating rescheduling of the TWT SP of the second link, wherein the third frame comprises: the link identifier (ID) information of the second link; and second updated timing information for the TWT SP of the second link.

Clause 86. The method of any one of clauses 79-85, further comprising receiving, by the non-AP MLD via the first link, an acknowledgement in response to the third frame.

Clause 87. The method of any one of clauses 79-86, further comprising based on the transmitting of the third frame to the AP MLD via the first link, transitioning, by the non-AP MLD, the second STA to an awake state at the beginning of the rescheduled TWT SP for the second link.

Clause 88. The method of any one of clauses 79-87, further comprising, based on the receiving of the second frame from the AP MLD, transitioning, by the non-AP MLD, the second STA to an awake state at the beginning of the rescheduled TWT SP for the second link.

Clause 89. The method of any one of clauses 79-88, further comprising transitioning, by the non-AP MLD, the second STA to the doze state at the end of the rescheduled TWT SP for the second link.

Clause 90. A wireless device comprising one or more processors and memory storing instructions that, when executed by the one or more processors, cause the computing device to perform the method of any one of clauses 79-89.

Clause 91. A system comprising: a non-access point (non-AP) multi-link device (MLD) configured to perform the method of any one of clauses 79-89, and an AP MLD configured to transmit the first frame and the second frame.

Clause 92. A computer-readable medium storing instructions that, when executed, cause performance of the method any one of clauses 79-89.

Clause 93. A method comprising receiving, by a non-access point (non-AP) multi-link device (MLD) from an AP MLD, a first frame indicating: a mapping of a first traffic identifier (TID) to a first link between a first station (STA) of the non-AP MLD and a first AP of the AP MLD; a mapping of a second TID to a second link between a second STA of the non-AP MLD and a second AP of the AP MLD; and configuration of a target wake time (TWT) service period (SP) of the second link.

Clause 94. The method of clause 93, further comprising transitioning, by the non-AP MLD, the second STA to a doze state.

Clause 95. The method of any one of clauses 93 and 94, further comprising transmitting, by the non-AP MLD via the first link, while the second STA is in the doze state, a second frame indicating rescheduling of the TWT SP of the second link, wherein the second frame comprises: a link identifier (ID) information of the second link; and updated timing information for the TWT SP of the second link.

Clause 96. The method of any one of clauses 93-95, further comprising determining, by the non-AP MLD, that the non-AP MLD has bufferable units (BUs) of the second TID for transmission outside the TWT SP of the second link.

Clause 97. A wireless device comprising one or more processors and memory storing instructions that, when executed by the one or more processors, cause the computing device to perform the method of any one of clauses 93-96.

Clause 98. A system comprising: a non-access point (non-AP) multi-link device (MLD) configured to perform the method of any one of clauses 93-96, and an AP MLD configured to transmit the first frame.

Clause 99. A computer-readable medium storing instructions that, when executed, cause performance of the method any one of clauses 1-14.

Clause 100. A method comprising receiving, by a non-access point (non-AP) multi-link device (MLD) from an AP MLD, a first frame indicating configuration of a target wake time (TWT) service period (SP) for a first link of a plurality of links between the AP MLD and the non-AP MLD.

Clause 101. The method of clause 100, further comprising receiving, by the non-AP MLD via a second link of the plurality of links, a second frame indicating rescheduling of the TWT SP for the first link, wherein the second frame comprises: a link identifier (ID) information of the first link; and timing information for the TWT SP of the first link.

Clause 102. The method of any one of clauses 100 and 101, further comprising transmitting, by the non-AP MLD to the AP MLD, an acknowledgement in response to the second frame.

Clause 103. The method of any one of clauses 100-102, wherein the TWT SP is an individual TWT SP, a broadcast TWT SP, or a restricted-TWT SP.

Clause 104. A wireless device comprising one or more processors and memory storing instructions that, when executed by the one or more processors, cause the computing device to perform the method of any one of clauses 100-103.

Clause 105. A system comprising: a non-access point (non-AP) multi-link device (MLD) configured to perform the method of any one of clauses 100-103, and an AP MLD configured to transmit the first frame and the second frame.

Clause 106. A computer-readable medium storing instructions that, when executed, cause performance of the method any one of clauses 100-103.

Clause 107. A method comprising receiving, by a non-access point (non-AP) multi-link device (MLD) from an AP MLD, a first frame indicating configuration of a target wake time (TWT) service period (SP) for a first link of a plurality of links between the AP MLD and non-AP MLD.

Clause 108. The method of clause 107, further comprising transmitting, by the non-AP MLD via a second link of the plurality of links, a second frame indicating rescheduling of the TWT SP for the first link, wherein the second frame comprises: a link identifier (ID) information of the first link; and timing information for the TWT SP of the first link.

Clause 109. A wireless device comprising one or more processors and memory storing instructions that, when executed by the one or more processors, cause the computing device to perform the method of any one of clauses 107 and 108.

Clause 110. A system comprising: a non-access point (non-AP) multi-link device (MLD) configured to perform the method of any one of clauses 107 and 108, and an AP MLD configured to transmit the first frame and the second frame.

Clause 111. A computer-readable medium storing instructions that, when executed, cause performance of the method any one of clauses 107 and 108.

An access point (AP) multi-link device (MLD) may perform a method comprising multiple operations. The AP MLD may transmit, to a non-AP MLD, a first frame indicating configuration of a target wake time (TWT) service period (SP) of a first link of a plurality of links between the AP MLD and non-AP MLD. The AP MLD may transmit, via a second link of the plurality of links, a second frame indicating rescheduling of the TWT SP of the first link. The second frame may comprise: a link identifier (ID) information of the first link; and updated timing information for the TWT SP of the first link. The AP MLD may also perform one or more additional operations. The AP MLD may receive, via the second link, a third frame indicating rescheduling of the TWT SP of the first link. The third frame may comprise: the link ID information of the first link; and second timing information for the TWT SP of the first link. The AP MLD may transmit, via the second link, an acknowledgement based on receiving the third frame. The first frame may further indicate: a first mapping of a first traffic identifier (TID) to the first link; and a second mapping of a second TID to the second link. The transmitting the second frame may be based on determining that bufferable units associated with a first traffic identifier (TID), mapped to the first link, are available for transmission outside the TWT SP of the first link. The AP MLD may receive at least one frame indicating: a third mapping of a first traffic identifier (TID) to the first link; a fourth mapping of a second TID to the second link; and a second configuration of the TWT SP of the first link. The first frame may indicate acceptance of one or more parameters indicated by the at least one frame. The link ID information may comprise an indication of the first link. The updated timing information may comprise a start time of the TWT SP of the first link. The TWT SP may be a next scheduled TWT SP among TWT SPs of the first link. The TWT SP may comprise one of an individual TWT, a broadcast TWT SP, or a restricted TWT SP. The second frame may be transmitted during a TWT SP configured for the second link. The second frame may be an action frame comprising a TWT information frame, an unprotected sub-1 GHz (S1G) action frame, or an extremely high throughput (EHT) action frame. The rescheduling of the TWT SP of the first link may comprise replacing a start time of the TWT SP of the first link with a time indicated in the second frame. The link ID information may be a link ID or a link ID bitmap. The AP MLD may comprise one or more processors; and memory storing instructions that, when executed by the one or more processors, cause the AP MLD to perform the described method, additional operations and/or include the additional elements. A system may comprise an AP MLD configured to perform the described method, additional operations and/or include the additional elements; and a non-AP MLD configured to receive the first frame and the second frame. A computer-readable medium may store instructions that, when executed, cause performance of the described method, additional operations and/or include the additional elements.

An access point (AP) multi-link device (MLD) may perform a method comprising multiple operations. The AP MLD may transmit, to a non-AP MLD, a first frame indicating configuration of a target wake time (TWT) service period (SP) of a first link of a plurality of links between the AP MLD and non-AP MLD. The AP MLD may receive, via a second link of the plurality of links, a second frame indicating rescheduling of the TWT SP of the first link. The second frame may comprise: link identifier (ID) information of the first link; and updated timing information for the TWT SP of the first link. The AP MLD may also perform one or more additional operations. The AP MLD may transmit, via the second link, a third frame indicating rescheduling of the TWT SP of the first link. The third frame may comprise: link identifier (ID) information of the first link; and updated timing information for the TWT SP of the first link. The AP MLD may receive, via the second link, an acknowledgement based on receiving the third frame. The first frame may further indicate: a first mapping of a first traffic identifier (TID) to the first link; and a second mapping of a second TID to the second link. The transmitting the second frame may be based on determining that bufferable units associated with a first traffic identifier (TID), mapped to the first link, are available for transmission outside the TWT SP of the first link. The AP MLD may receive at least one frame indicating: a third mapping of a first traffic identifier (TID) to the first link; a fourth mapping of a second TID to the second link; and a second configuration of the TWT SP of the first link. The first frame may indicate acceptance of one or more parameters indicated by the at least one frame. The link ID information may comprise an indication of the first link. The updated timing information may comprise a start time of the TWT SP of the first link. The TWT SP may be a next scheduled TWT SP among TWT SPs of the first link. The AP MLD may transmit via the second link, an acknowledgement in response to the second frame. The AP MLD may comprise one or more processors; and memory storing instructions that, when executed by the one or more processors, cause the AP MLD to perform the described method, additional operations and/or include the additional elements. A system may comprise an AP MLD configured to perform the described method, additional operations and/or include the additional elements; and a non-AP MLD configured to transmit the second frame. A computer-readable medium may store instructions that, when executed, cause performance of the described method, additional operations and/or include the additional elements.

A non-access point (non-AP) multi-link device (MLD) may perform a method comprising multiple operations. The non-AP MLD may receive, from an access point (AP) MLD, a first frame indicating configuration of a target wake time (TWT) service period (SP) of a first link of a plurality of links between the AP MLD and the non-AP MLD. The non-AP MLD may transition a first station affiliated with the non-AP MLD to a doze state. The non-AP MLD may receive, via a second link of the plurality of links while the first station is in the doze state, a second frame indicating rescheduling of the TWT SP of the first link, The second frame may comprise: link identifier (ID) information of the first link; and timing information for the TWT SP of the first link. The non-AP MLD may also perform one or more additional operations. The first station may be associated with the first link. The non-AP MLD may transmit, via the second link while the first station is in the doze state, a third frame indicating rescheduling of the TWT SP of the first link. The third frame may comprise: the link ID information of the first link; and second timing information for the TWT SP of the first link. The non-AP MLD may transmit, by the AP MLD via the second link, an acknowledgement based on receiving the third frame. The link ID information may comprise an indication of the first link. The timing information may comprise a start time of the TWT SP of the first link. The TWT SP may be a next scheduled TWT SP among TWT SPs of the first link. The non-AP MLD may comprise one or more processors; and memory storing instructions that, when executed by the one or more processors, cause the non-AP MLD to perform the described method, additional operations and/or include the additional elements. A system may comprise a non-AP MLD configured to perform the described method, additional operations and/or include the additional elements; and an AP MLD configured to transmit the first frame and the second frame. A computer-readable medium may store instructions that, when executed, cause performance of the described method, additional operations and/or include the additional elements.

An access point (AP) multi-link device (MLD) may perform a method comprising multiple operations. The AP MLD may transmit, a non-AP MLD, a first frame indicating: a first mapping of a first traffic identifier (TID) to a first link between a first station (STA) of the non-AP MLD and a first AP of the AP MLD; a second mapping of a second TID to a second link between a second STA of the non-AP MLD and a second AP of the AP MLD; and a first configuration of a target wake time (TWT) service period (SP) of the second link. The AP MLD may transmit, via the first link, a second frame indicating rescheduling of the TWT SP of the second link. The second frame may comprise: a link identifier (ID) information of the second link; and first updated timing information for the TWT SP of the second link. The AP MLD may also perform one or more additional operations. The AP MLD may determine that bufferable units (BUs) of the second TID are ready for transmission outside the TWT SP of the second link. The transmitting of the second frame may be based on the determining. The AP MLD may receive, from the non-AP MLD, at least one request frame comprising parameters indicating: a third mapping of the first TID to the first link; a fourth mapping of the second TID to the second link; a second configuration of the TWT SP of the second link. The first frame may indicate acceptance of the parameters comprised by the at least one request frame. The at least one request frame may be received and the at least one first frame may be transmitted via the first link. The second frame may further comprise a link ID information type. The link ID information type may indicate whether the link ID information comprises a link ID or a link ID bitmap. The link ID information type may indicate a link ID bitmap and may further indicate whether a same update timing information for the TWT SP may be applied to links indicated in the link ID bitmap, or whether a respective updated timing information may be applied to each link indicated in the link ID bitmap. According to a value of the link ID information type, the first updated timing information may be repeated N times in the second frame based on a quantity of bits, indicated in the link ID bitmap, being equal to N. According to a value of the link ID information type, the first updated timing information may be repeated N-1 times in the second frame based on a quantity of bits indicated in a link ID bitmap being equal to N. The AP MLD may receive, from the non-AP MLD, an acknowledgement in response to transmitting the second frame. The TWT SP of the second link may be an individual TWT SP, a broadcast TWT SP, or a restricted TWT SP. The TWT SP of the second link may be a first upcoming TWT SP among TWT SPs of the second link. The second frame may be transmitted during a TWT SP configured for the first link. The second frame may be an action frame including a TWT information frame, an unprotected S1G action frame, or an EHT action frame. The rescheduling of the TWT SP of the second link may comprise replacing a start time of the TWT SP of the second link with a time indicated in the second frame. The second frame may further comprise a TWT Information field. The link ID information may comprise a link ID. A size of the link ID may be 4 bits. The link ID information may comprise a link ID bitmap. The link ID bitmap may comprise bits corresponding to each setup link. A size of the link ID bitmap may be 16 bits. The AP MLD may receive, via the first link, a third frame indicating rescheduling of the TWT SP for the second link. The third frame may comprise: the link ID information of the second link; and second timing information for the TWT SP of the second link. The AP MLD may transmit, via the first link, an acknowledgement in response to the third frame. The third frame may further comprise a link ID information type. The third frame may be transmitted during a TWT SP configured for the first link. The rescheduling of the TWT SP of the second link may comprise replacing a start time of the TWT SP of the second link with a time indicated in the third frame. The third frame may further comprise a TWT information field. The AP MLD may comprise one or more processors; and memory storing instructions that, when executed by the one or more processors, cause the AP MLD to perform the described method, additional operations and/or include the additional elements. A system may comprise an AP MLD configured to perform the described method, additional operations and/or include the additional elements; and a non-AP MLD configured to receive the first frame and the second frame. A computer-readable medium may store instructions that, when executed, cause performance of the described method, additional operations and/or include the additional elements.

An access point (AP) multi-link device (MLD) may perform a method comprising multiple operations. The AP MLD may transmit, to a non-AP MLD, a first frame indicating; a mapping of a first traffic identifier (TID) to a first link between a first station (STA) of the non-AP MLD and a first AP of the AP MLD; a mapping of a second TID to a second link between a second STA of the non-AP MLD and a second AP of the AP MLD; and configuration of a target wake time (TWT) service period (SP) of the second link. The AP MLD may receive, via the first link, a second frame indicating rescheduling of the TWT SP for the second link. The second frame may comprise: link ID information of the second link; and updated timing information for the TWT SP of the second link. The AP MLD may also perform one or more additional operations. The AP MLD may transmit, via the first link, an acknowledgement in response to the first frame. The AP MLD may comprise one or more processors; and memory storing instructions that, when executed by the one or more processors, cause the AP MLD to perform the described method, additional operations and/or include the additional elements. A system may comprise an AP MLD configured to perform the described method, additional operations and/or include the additional elements; and a non-AP MLD configured to receive the first frame. A computer-readable medium may store instructions that, when executed, cause performance of the described method, additional operations and/or include the additional elements.

A non-access point (non-AP) multi-link device (MLD) may perform a method comprising multiple operations. The non-AP MLD may receive, from an AP MLD, a first frame indicating: a first mapping of a first traffic identifier (TID) to a first link between a first station (STA) of the non-AP MLD and a first AP of the AP MLD; a first mapping of a second TID to a second link between a second STA of the non-AP MLD and a second AP of the AP MLD; and first configuration of a target wake time (TWT) service period (SP) of the second link. The non-AP MLD may transition the second STA to a doze state. The non-AP MLD may receiving, via the first link, while the second STA is in the doze state, a second frame indicating rescheduling of the TWT SP of the second link. The second frame may comprise: a link identifier (ID) information of the second link; and first timing information for the TWT SP of the second link. The non-AP MLD may also perform one or more additional operations. The non-AP MLD may transmit, to the AP MLD, an acknowledgement in response to the second frame. The non-AP MLD may transmit, to the AP MLD, a request frame comprising parameters indicating: a second mapping of the first TID to the first link; a third mapping of the second TID to the second link; and second configuration of the TWT SP for the second link, The first response may indicate acceptance of the parameters comprised in the request frame. The non-AP MLD may determine that the non-AP MLD has bufferable units (BUs) of the second TID for transmission outside the TWT SP of the second link. The non-AP MLD may transmit, to the AP MLD via the first link, while the second link is in the doze state, a third frame indicating rescheduling of the TWT SP of the second link. The third frame may comprise: the link identifier (ID) information of the second link; and second updated timing information for the TWT SP of the second link. The non-AP MLD may receive, via the first link, an acknowledgement in response to the third frame. The non-AP MLD may, based on the transmitting of the third frame to the AP MLD via the first link, transition the second STA to an awake state at the beginning of the rescheduled TWT SP for the second link. The non-AP MLD may, based on the receiving of the second frame from the AP MLD, transition the second STA to an awake state at the beginning of the rescheduled TWT SP for the second link. The non-AP MLD may transition the second STA to the doze state at the end of the rescheduled TWT SP for the second link. The non-AP MLD may comprise one or more processors; and memory storing instructions that, when executed by the one or more processors, cause the non-AP MLD to perform the described method, additional operations and/or include the additional elements. A system may comprise a non-AP MLD configured to perform the described method, additional operations and/or include the additional elements; and an AP MLD configured to transmit the first frame and the second frame. A computer-readable medium may store instructions that, when executed, cause performance of the described method, additional operations and/or include the additional elements.

A non-access point (non-AP) multi-link device (MLD) may perform a method comprising multiple operations. The non-AP MLD may receive, from an AP MLD, a first frame indicating: a mapping of a first traffic identifier (TID) to a first link between a first station (STA) of the non-AP MLD and a first AP of the AP MLD; a mapping of a second TID to a second link between a second STA of the non-AP MLD and a second AP of the AP MLD; and configuration of a target wake time (TWT) service period (SP) of the second link. The non-AP MLD may transition the second STA to a doze state. The non-AP MLD may transmit, via the first link, while the second STA is in the doze state, a second frame indicating rescheduling of the TWT SP of the second link. The second frame may comprise: a link identifier (ID) information of the second link; and updated timing information for the TWT SP of the second link. The non-AP MLD may also perform one or more additional operations. The non-AP MLD may determine that the non-AP MLD has bufferable units (BUs) of the second TID for transmission outside the TWT SP of the second link. The non-AP MLD may comprise one or more processors; and memory storing instructions that, when executed by the one or more processors, cause the non-AP MLD to perform the described method, additional operations and/or include the additional elements. A system may comprise a non-AP MLD configured to perform the described method, additional operations and/or include the additional elements; and an AP MLD configured to transmit the first frame. A computer-readable medium may store instructions that, when executed, cause performance of the described method, additional operations and/or include the additional elements.

A non-access point (non-AP) multi-link device (MLD) may perform a method comprising multiple operations. The non-AP MLD may receive, from an AP MLD, a first frame indicating configuration of a target wake time (TWT) service period (SP) for a first link of a plurality of links between the AP MLD and the non-AP MLD. The non-AP MLD may receive, via a second link of the plurality of links, a second frame indicating rescheduling of the TWT SP for the first link. The second frame may comprise: a link identifier (ID) information of the first link; and timing information for the TWT SP of the first link. The non-AP MLD may also perform one or more additional operations. The non-AP MLD may transmit, to the AP MLD, an acknowledgement in response to the second frame. The TWT SP is an individual TWT SP, a broadcast TWT SP, or a restricted-TWT SP. The non-AP MLD may comprise one or more processors; and memory storing instructions that, when executed by the one or more processors, cause the non-AP MLD to perform the described method, additional operations and/or include the additional elements. A system may comprise a non-AP MLD configured to perform the described method, additional operations and/or include the additional elements; and an AP MLD configured to transmit the first frame and the second frame. A computer-readable medium may store instructions that, when executed, cause performance of the described method, additional operations and/or include the additional elements.

A non-access point (non-AP) multi-link device (MLD) may perform a method comprising multiple operations. The non-AP MLD may receive, from an AP MLD, a first frame indicating configuration of a target wake time (TWT) service period (SP) for a first link of a plurality of links between the AP MLD and non-AP MLD. The non-AP MLD may transmit, via a second link of the plurality of links, a second frame indicating rescheduling of the TWT SP for the first link. The second frame may comprise: a link identifier (ID) information of the first link; and timing information for the TWT SP of the first link. The non-AP MLD may also perform one or more additional operations. The non-AP MLD may comprise one or more processors; and memory storing instructions that, when executed by the one or more processors, cause the non-AP MLD to perform the described method, additional operations and/or include the additional elements. A system may comprise a non-AP MLD configured to perform the described method, additional operations and/or include the additional elements; and an AP MLD configured to transmit the first frame. A computer-readable medium may store instructions that, when executed, cause performance of the described method, additional operations and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

An access point (and an AP MLD) may communicate with one or more wireless devices (e.g., computing device(s), non-AP MLD(s), station(s), etc.). Computing devices described herein may support multiple technologies, and/or multiple releases of the same technology. Computing devices may have some specific capability(ies) depending on wireless device category and/or capability(ies). Computing devices referred to herein may correspond to a plurality of computing devices compatible with a given LTE, 5G, 3GPP or non-3GPP release, IEEE 802.11 Standard(s) (e.g., IEEE 802.11be, beyond IEEE 802.11be), or Wi-Fi Alliance (WFA) Standard(s) (e.g., Wi-Fi 7, Wi-Fi 8) technology. A plurality of computing devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of access points and/or a plurality of wireless devices in a coverage area that may not comply with the disclosed methods, for example, because those wireless devices and/or access points may perform based on other (e.g., older or newer) releases of LTE, 5G, 3GPP or non-3GPP, IEEE 802.11 Standards (e.g., IEEE 802.11be, beyond IEEE 802.11be), or Wi-Fi Alliance (WFA) Standards (e.g., Wi-Fi 7, Wi-Fi 8) technology.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as access points (APs), AP multi-link devices(MLDs), stations (STAs), non-AP STAs, non-AP MLDs, base stations, wireless devices or user equipment (wireless device), servers, switches, antennas, and/or the like. A network may comprise any wireless technology, including but not limited to, cellular, wireless, WiFi, 4G, 5G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:
transmitting, by an access point, AP, multi-link device, MLD, to a non-AP MLD, a first frame indicating configuration of a target wake time, TWT, service period, SP, of a first link of a plurality of links between the AP MLD and non-AP MLD; and
receiving, by the AP MLD from the non-AP MLD via a second link of the plurality of links, a second frame indicating rescheduling of the TWT SP of the first link, wherein the second frame comprises link identifier, ID, information of the first link.

2. The method of claim 1, wherein the link ID information comprises a link ID bitmap comprising a plurality of bits corresponding to the plurality of links, and wherein a value of a first bit, of the plurality of bits, corresponding to the first link is equal to 1 to indicate the first link.

3. The method of any of claims 1-2, wherein the second frame comprises a TWT information frame.

4. The method of claim 3, wherein the TWT information frame comprises a 'next TWT' subfield indicating a value for a next start time of the TWT SP of the first link.

5. The method of any of claims 3-4, wherein the TWT information frame comprises an 'All TWT' subfield set to zero.

6. The method of any of claims 3-5, wherein the TWT information frame comprises a TWT Flow Identifier (ID) subfield that identifies the TWT SP of the first link.

7. The method of any one of claims 1-6, wherein the second frame comprises timing information for the TWT SP of the first link, the timing information comprising a start time of the TWT SP of the first link.

8. A method comprising:
receiving, by a non-access point, non-AP, multi-link device, MLD, from an access point, AP, MLD, a first frame indicating configuration of a target wake time, TWT, service period, SP, of a first link of a plurality of links between the AP MLD and the non-AP MLD; and
transmitting, by the non-AP MLD to the AP MLD via a second link of the plurality of links, a second frame indicating rescheduling of the TWT SP of the first link, wherein the second frame comprises link identifier, ID, information of the first link.

9. The method of claim 8, wherein the link ID information comprises a link ID bitmap comprising a plurality of bits corresponding to the plurality of links, and wherein a value of a first bit, of the plurality of bits, corresponding to the first link is equal to 1 to indicate the first link.

10. The method of any of claims 8-9, wherein the second frame comprises a TWT information frame.

11. The method of claim 10, wherein the TWT information frame comprises a 'next TWT' subfield indicating a value for a next start time of the TWT SP of the first link.

12. The method of any of claims 10-11, wherein the TWT information frame comprises a TWT Flow Identifier (ID) subfield that identifies the TWT SP of the first link.

13. The method of any one of claims 8-12, wherein the second frame comprises timing information for the TWT SP of the first link, the timing information comprising a start time of the TWT SP of the first link.

14. A device comprising:
one or more processors; and
memory storing instructions that, when executed by the one or more processors, cause the device to perform a method according to any of claims 1-13.

15. A computer-readable medium storing instructions that, when executed by one or more processors of a device, cause the device to perform a method according to any of claims 1-13.
